(19) Europäisches Patentamt
European Patent Office
Office européen des brevets

(11) **EP 4 742 739 A1**

(12) **EUROPEAN PATENT APPLICATION**
published in accordance with Art. 153(4) EPC

(43) Date of publication:
**13.05.2026  Bulletin 2026/20**

(21) Application number: **24838469.5**

(22) Date of filing: **24.05.2024**

(51) International Patent Classification (IPC):
*H04W 24/10* (2009.01)

(52) Cooperative Patent Classification (CPC):
**H04W 24/02; H04W 24/08; H04W 24/10**

(86) International application number:
**PCT/CN2024/095133**

(87) International publication number:
**WO 2025/011211 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **07.07.2023  CN 202310834506**

(71) Applicant: **Datang Mobile Communications Equipment Co., Ltd.
Beijing 100085 (CN)**

(72) Inventors:
• **SONG, Lei
Beijing 100085 (CN)**
• **SU, Xin
Beijing 100085 (CN)**

(74) Representative: **Ipsilon
12, Avenue d'Italie
75013 Paris (FR)**

(54) **MEASUREMENT REPORTING METHOD, TERMINAL, NETWORK DEVICE, APPARATUS, AND STORAGE MEDIUM**

(57) Embodiments of the present disclosure provide a measurement reporting method, a terminal, a network device, an apparatus, and a storage medium. The method comprises: receiving configuration information sent by a network device, wherein the configuration information comprises a first measurement resource group set; on the basis of the configuration information, determining a second measurement resource group set from the first measurement resource group set; and on the basis of the second measurement resource group set, reporting a measurement value and indication information to the network device, wherein the indication information is used for determining the correspondence between a measurement resource group in the second measurement resource group set and the measurement value, and/or the indication information is used for determining a measurement resource group corresponding to the measurement value.

Receiving configuration information transmitted by a network device, where the configuration information includes a first measurement resource group set — 101

Determining, based on the configuration information, a second measurement resource group set from the first measurement resource group set — 102

Reporting, based on the second measurement resource group set, a measurement value and indication information to the network device — 103

FIG. 1

**Description**

CROSS-REFERENCES TO RELATED APPLICATIONS

The present application claims priority to Chinese patent application No. 202310834506.1 filed on July 7, 2023, entitled "Measurement Reporting Method, Terminal, Network Device, Apparatus, and Storage Medium", which is hereby incorporated by reference in its entirety.

FIELD

The present application relates to the field of communication, and in particular to a measurement reporting method, terminal, network device, apparatus, and storage medium.

BACKGROUND

In related art, the network side configures at most 2 measurement resource groups, corresponding to 2 transmission reception points (TRPs) for a terminal (e.g., user equipment, UE) to perform measurement reporting. TRPs are also called coordination points. When the UE performs measurement reporting, it selects resource pairs/beam pairs from 2 measurement resource groups for reporting.

However, in the development of user-centric mobile communication systems, network deployment will be more intensive, that is, TRP deployment will be more intensive. When there are a large number of potential service TRPs, measuring and reporting only 2 TRPs at a time will greatly increase system latency.

BRIEF SUMMARY

In order to solve the above problems in related art, embodiments of the present application provide a measurement reporting method, terminal, network device, apparatus, and storage medium.

In a first aspect, an embodiment of the present application provides a measurement reporting method, performed by a terminal, the method including:

receiving configuration information transmitted by a network device, where the configuration information includes a first measurement resource group set;

determining, based on the configuration information, a second measurement resource group set from the first measurement resource group set; and

reporting, based on the second measurement resource group set, a measurement value and indication information to the network device;

where the indication information is used to determine a correspondence between a measurement resource group in the second measurement resource group set and the measurement value, and/or the indication information is used to determine a measurement resource group corresponding to the measurement value.

In some embodiments, the correspondence is determined based on the indication information, or the correspondence is determined based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, reporting the indication information to the network device includes:
in a case where the indication information indicates the second measurement resource group set or the indication information indicates the third measurement resource group set, the indication information is reported by T1 bits, where T1 is a positive integer.

In some embodiments, in a case where the indication information is used to indicate the measurement resource group corresponding to the maximum measurement value and the second measurement resource group set, reporting the indication information to the network device includes:

indicating the measurement resource group corresponding to the maximum measurement value using T2 bits and indicating other measurement resource groups in the second measurement resource group set except for the measurement resource group corresponding to the maximum measurement value using T3 bits, where T2 and T3 are positive integers; or

indicating the second measurement resource group set using T4 bits and indicating the measurement resource group corresponding to the maximum measurement value in the second measurement resource group set using T5 bits, where T4 and T5 are positive integers.

In some embodiments, the second measurement resource group set includes a measurement resource group set used for channel measurement and a measurement resource group set used for interference measurement, and the indication information is used to indicate at least two of:

the second measurement resource group set;

the measurement resource group set used for channel measurement; or

the measurement resource group set used for interference measurement.

In some embodiments, in a case where the correspondence is determined based on the indication information, the indication information is used to indicate the correspondence.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, reporting the measurement value to the network device including: reporting layer 1 reference signal received power, L1-RSRP and/or a layer 1 signal to interference plus noise ratio, L1-SINR to the network device.

In some embodiments, reporting the L1-RSRP and/or the L1-SINR to the network device includes:

in a case where a measurement resource group set used for interference measurement is an empty set or the indication information only indicates a measurement resource group set used for channel measurement, reporting the L1-RSRP to the network device;

in a case where a measurement resource group set used for interference measurement is a non-empty set or the indication information indicates a measurement resource group set used for interference measurement, reporting the L1-SINR to the network device; or

in a case where a measurement resource group set used for interference measurement is a non-empty set or the indication information indicates a measurement resource group set used for interference measurement, reporting the L1-RSRP and the L1-SINR to the network device.

In some embodiments, reporting the L1-RSRP and the L1-SINR to the network device includes:

reporting the L1-RSRP and the L1-SINR to the network device in a non-differential reporting manner; or

reporting the L1-RSRP and the L1-SINR to the network device in a differential reporting manner, where a differential is respectively performed between L1-RSRP, and between L1-SINRs.

In some embodiments, in a case where the measurement value includes the L1-SINR, reporting the measurement value to the network device includes:

determining the L1-SINR based on at least two of an indicated measurement resource group, a measurement resource group used for channel measurement, or a measurement resource group used for interference measurement, and reporting the L1-SINR to the network device;

in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,

in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

In some embodiments, determining the second measurement resource group set from the first measurement resource group set including: determining the second measurement resource group set from the first measurement resource group set based on network side configuration or a predefined rule.

In some embodiments, in a case where the terminal performs group-based measurement reporting, determining the second measurement resource group from the first measurement resource group includes: determining, from the first measurement resource group set, a second measurement resource group set corresponding to a reporting group selected by the terminal, where different reporting groups correspond to same or different second measurement resource group sets; or determining, from the first measurement resource group set, second measurement resource group sets corresponding to all reporting groups selected by the terminal.

In some embodiments, the first measurement resource group set includes K measurement resource groups, and K is an integer greater than 2.

In a second aspect, an embodiment of the present application provides a measurement reporting method, performed by a network device, the method including:

transmitting configuration information to the terminal, the configuration information including a first measurement resource group set;

receiving a measurement value and indication information reported by the terminal;

determining, based on the indication information, a correspondence between a measurement resource group in a second measurement resource group set and a measurement value; and/or,

determining, based on the indication information, a measurement resource group corresponding to the measurement value;

where the second measurement resource group set is selected from the first measurement resource group set.

In some embodiments, determining, based on the indication information, a correspondence between a measurement resource group in a second measurement resource group set and the measurement value, includes:

determining the correspondence based on the indication information; or

determining the correspondence based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, the second measurement resource group set includes a measurement resource group set used for channel measurement and a measurement resource group set used for interference measurement, and the indication information is used to indicate at least two of:

the second measurement resource group set;

the measurement resource group set used for channel measurement; or

the measurement resource group set used for interference measurement.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, receiving the measurement value reported by the terminal includes:
receiving layer 1 reference signal received power, L1-RSRP and/or a layer 1 signal to interference plus noise ratio, L1-SINR reported by the terminal.

In some embodiments, in a case where the measurement value includes the L1-SINR, receiving the measurement value reported by the terminal includes:

receiving an L1-SINR corresponding to a reporting group reported by the terminal, where the L1-SINR corresponding to the reporting group is determined based on at least two of a measurement resource group corresponding to the reporting group, a measurement resource group used for channel measurement, or a measurement resource group used for interference measurement;

receiving multiple L1-SINRs corresponding to a reporting group reported by the terminal, where the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or

receiving multiple L1-SINRs corresponding to a reporting group reported by the terminal, where the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

In a third aspect, an embodiment of the present application provides a terminal, including a memory, a transceiver

and a processor,

where the memory is used for storing a computer program; the transceiver is used for receiving and transmitting data under control of the processor; and the processor is used for reading the computer program in the memory and performing the measurement reporting method described in the first aspect.

In a fourth aspect, an embodiment of the present application provides a network device, including: a memory, a transceiver, and a processor,

where the memory is used for storing a computer program; the transceiver is used for receiving and transmitting data under control of the processor; and the processor is used for reading the computer program in the memory and performing the measurement reporting method described in the second aspect.

In a fifth aspect, an embodiment of the present application provides a measurement reporting apparatus, the apparatus including:

a receiving unit, used for receiving configuration information transmitted by a network device, where the configuration information includes a first measurement resource group set;

a determining unit, used for determining, based on the configuration information, a second measurement resource group set from the first measurement resource group set; and

a reporting unit, used for reporting, based on the second measurement resource group set, a measurement value and indication information to the network device;

where the indication information is used to determine a correspondence between a measurement resource group in the second measurement resource group set and the measurement value, and/or the indication information is used to determine a measurement resource group corresponding to the measurement value.

In a sixth aspect, an embodiment of the present application provides a measurement reporting apparatus, the apparatus including:

a transmitting unit, used for transmitting configuration information to a terminal, where the configuration information includes a first measurement resource group set;

a receiving unit, used for receiving a measurement value and indication information reported by the terminal;

a determining unit, used for determining, based on the indication information, a correspondence between a measurement resource group in a second measurement resource group set and the measurement value, and/or determining, based on the indication information, a measurement resource group corresponding to the measurement value;

where the second measurement resource group set is selected from the first measurement resource group set.

In a seventh aspect, an embodiment of the present application further provides a processor-readable storage medium, where the processor-readable storage medium stores a computer program configured to cause a processor to perform the measurement reporting method described in the first aspect or the second aspect.

In an eighth aspect, an embodiment of the present application further provides a non-transitory readable storage medium storing a computer program, where the computer program is used for causing a computer to perform the measurement reporting method described in the first aspect or the second aspect.

In a ninth aspect, an embodiment of the present application further provides a communications device, where the communications device stores a computer program configured to cause the communications device to perform the measurement reporting method described in the first aspect or the second aspect.

In a tenth aspect, an embodiment of the present application further provides a chip product, where the chip product stores a computer program configured to cause the chip product to perform the measurement reporting method described in the first aspect or the second aspect.

The embodiments of the present application provide a measurement reporting method, terminal, network device, apparatus and storage medium. In the measurement reporting method, terminal, network device, apparatus and storage medium, a first measurement resource group set is configured on network side, and the terminal selects a second measurement resource group set from the first measurement resource group set, and reports a measurement value and indication information to the network side. The indication information is used for determining a correspondence between the measurement value and a measurement resource group and/or determining a measurement resource group corresponding to the measurement value. The measurement reporting method, terminal, network device, apparatus and storage medium enable the terminal to report beam information of multiple TRP joint transmissions in one report, where a number of reported measurement resource groups is determined by the terminal. The measurement reporting method, terminal, network device, apparatus and storage medium are more suitable for terminal-centric transmission systems, effectively improving measurement efficiency and reducing measurement delay.

BRIEF DESCRIPTION OF THE DRAWINGS

To clearly illustrate the solutions in the embodiments of the present application or the prior art, the drawings used in the description of the embodiments or the prior art are briefly described below. Apparently, the drawings in the following description are only some embodiments of the present application, and other drawings may be obtained according to these drawings without any creative effort by those skilled in the art.

FIG. 1 is a first schematic flow chart of a measurement reporting method according to an embodiment of the present application;

FIG. 2 is a second schematic flow chart of a measurement reporting method according to an embodiment of the present application;

FIG. 3 is a schematic diagram of a structure of a terminal provided by an embodiment of the present application;

FIG. 4 is a schematic diagram of a structure of a network device provided by an embodiment of the present application;

FIG. 5 is a first schematic diagram of a structure of a measurement reporting apparatus according to an embodiment of the present application;

FIG. 6 is a second schematic diagram of a structure of a measurement reporting apparatus according to an embodiment of the present application.

DETAILED DESCRIPTION

In order to better describe the solutions in the embodiments of the present application, relevant knowledge is introduced below.

A UE performs measurement reporting according to the configuration of report settings. Each report setting is associated with one or more channel state information (CSI) resource settings. A CSI measurement setting includes one or two CSI resource sets or synchronization signal block (SSB) resource sets. A CSI resource set includes one or more channel state information reference signal (CSI-RS) resources. An SSB resource set includes one or more SSB resources. Each CSI-RS resource or SSB resource is configured with at most one quasi colocation (QCL) parameter.

When a network side configures the UE for group-based measurement reporting, the UE may report N groups of beam information, each group including information on 2 beams. The beam information includes a resource indicator and a measurement value. The resource indicator may be a channel state information reference signal resource indicator (CSI-RS Resource Indicator, CRI) or a synchronization signal block resource indicator (SSBRI), which is used to indicate a reference signal corresponding to the measurement value. The measurement value may be layer 1 reference signal receiving power (L1-RSRP) or a layer 1 signal to interference plus noise ratio (L1-SINR).

Specifically, when N=1, beam information includes CRI/SSBRI + L1-RSRP/L1-SINR; when N>1, beam information includes CRI/SSBRI + L1-RSRP. 2 beams in a group may be received simultaneously by the UE. This measurement reporting method may be applied in multi-TRP scenarios, where the UE reports multiple beam pairs suitable for multi-TRP transmission in one measurement report.

When the network side configures the UE for non-group-based measurement reporting, the UE may report N pieces of beam information, each corresponding to a CRI/SSBRI and a measurement value (L1-RSRP/L1-SINR).

However, related art only supports a maximum of 2 TRPs serving a UE, that is, the network configures a maximum of 2 measurement resource groups (corresponding to 2 TRPs) for the UE to report measurements. When reporting, the UE selects resource pairs/beam pairs from the 2 measurement resource groups for reporting, that is, reporting a beam combination suitable for joint transmission of 2 TRPs.

For the user-centric next-generation mobile communication 6G system, TRP deployment will be even more intensive, and a number of TRPs that may serve a UE will also increase accordingly, for example, supporting 4, 6, or 8 TRPs to serve the UE.

When a number of potential service TRPs is large, the measurement reporting method of the related art cannot support joint transmission of more than 2 TRPs. If measurement reporting is performed in groups of 2 TRPs, longer measurement delays will be introduced. Therefore, it is necessary to enhance measurement reporting for scenarios with a large number of TRPs.

In addition, when the number of TRPs is greater than 1, for example, in a scenario where more than 1 group of beams are reported, the measurement reporting method in the related art cannot support L1-SINR measurement reporting and cannot reflect mutual interference between beams of multiple TRPs.

In order to solve the above problems in related art, the embodiments of the present application provide a measurement reporting method, terminal, network device, apparatus and storage medium. In the measurement reporting method, terminal, network device, apparatus or storage medium, a first measurement resource group set is configured on network side, and the terminal selects a second measurement resource group set from the first measurement resource group set, and reports a measurement value and indication information to the network side. The indication information is used for determining a correspondence between the measurement value and a measurement resource group and/or determining a measurement resource group corresponding to the measurement value. The measurement reporting method, terminal, network device, apparatus or storage medium enables the terminal to report beam information of multiple TRP joint transmissions in one report, where a number of reported measurement resource groups is determined by the terminal. The measurement reporting method, terminal, network device, apparatus or storage medium is more suitable for terminal-centric transmission systems, effectively improving measurement efficiency and reducing measurement delay.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

In the embodiments of the present application, "determining B based on A" means that the factor A should be considered when determining B. This is not limited to "determining B based on A alone" and should also include "determining B based on A and C", "determining B based on A, C, and E", "determining C based on A, and further determining B based on C", and so on. Also, this could include using A as a condition for determining B, for example, "when A meets a first condition, determine B using a first method"; for another example, "when A meets a second condition, determine B" and so on; for still another example, "when A meets a third condition, determine B based on a first parameter" and so on. Of course, it could also include using A as a condition for determining a factor of B, for example, "when A meets a first condition, determine C using a first method, and further determine B based on C".

The solutions provided by the embodiments of the present application are applicable to a variety of systems, particularly 5G systems, 5G Advanced systems, 6G systems, and their evolved systems. For example, applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and may also include a core network part, such as an evolved packet system (EPS), a 5G system (5GS), and the like.

The terminal in the embodiments of the present application may be a device that provides voice and/or data connectivity to a user, a hand-held device with a wireless connection function, other processing device connected to a wireless modem, or the like. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or referred to as cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal may also be called a system, a subscriber unit, a subscriber station, a mobile station, a mobile, a remote station, an access point, a remote terminal, an access terminal, a user terminal, a user agent, or a user device, which are not limited in the embodiments of the present application.

The network device in the embodiments of the present application may be a base station, and the base station may include multiple cells providing services for the terminal. Depending on specific applications, the base station may also be called an access point, or may be a device in the access network that communicates with radio terminal through one or more sectors on the air interface, or other names. The network device may be used to exchange received air frames with internet protocol (IP) packets, and act as a router between radio terminal and the rest of the access network, and the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, the network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

The solutions in the embodiments of the present application are clearly and completely described in the following with reference to the accompanying drawings in the embodiments of the present application. Apparently, these embodiments are only a part of the embodiments of the present application, and not all of the embodiments. All other embodiments obtained by those skilled in the art based on the embodiments of the present application without any creative effort belong to the scope of the present application.

In one measurement report, the network side configures one or more CSI resource settings for the UE. Each CSI resource setting includes one or more CSI resource sets, one or more CSI resource subsets, one or more SSB resource sets, one or more SSB resource subsets, or the like. For simplicity, CSI resource sets, CSI resource subsets, SSB resource sets, SSB resource subsets and the like are collectively referred to as CSI measurement resource groups. Each CSI measurement resource group corresponds to measurement resources of a TRP. A CSI measurement resource group includes one or more CSI resources or one or more SSB resources.

Reporting methods of the terminal may be divided into group-based measurement reporting and non-group-based measurement reporting. In group-based measurement reporting, the terminal reports N groups of beam information at a time, with each group including information on two or more beams. The beam information includes a resource indicator (CRI or SSBRI) and a measurement value (such as L1-RSRP or L1-RSRP, etc.). A reporting group corresponds to a group of beam information reported by the terminal. Resources indicated by multiple resource indicators in a reporting group may be received simultaneously by the UE.

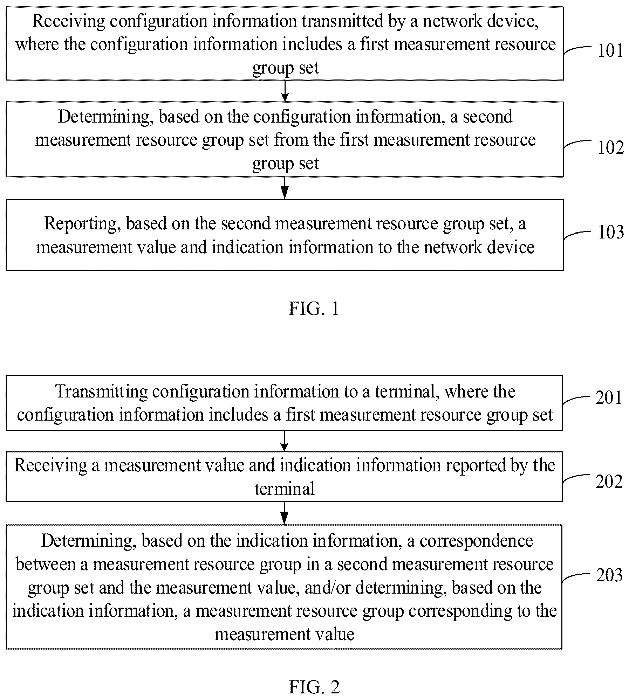

FIG. 1 is a first schematic flow chart of a measurement reporting method according to an embodiment of the present application. As shown in FIG. 1, the method may be performed by a terminal, the method includes:

S101: receiving configuration information transmitted by a network device, where the configuration information includes a first measurement resource group set.

S102: determining, based on the configuration information, a second measurement resource group set from the first measurement resource group set.

S103: reporting, based on the second measurement resource group set, a measurement value and indication information to the network device.

The second measurement resource group set is a subset of the first measurement resource group set. The indication information is used to determine a correspondence between a measurement resource group in the second measurement resource group set and the measurement value, and/or the indication information is used to determine a measurement resource group corresponding to the measurement value.

In the embodiment of the present application, the terminal receives configuration information transmitted by the network device. The configuration information includes a first measurement resource group set. The first measurement resource group set includes multiple measurement resource groups, for example, K measurement resource groups, where K is greater than or equal to 2. The present application mainly describes a case where K is greater than 2.

The terminal selects a second measurement resource group set from the first measurement resource group set for measurement reporting. The second measurement resource group set includes one or more measurement resource groups, and the second measurement resource group set is a subset of the first measurement resource group set. For example, the terminal selects M measurement resource groups from the K measurement resource groups for measurement reporting, and the terminal has a total of $\sum_{m=1}^{K} C_K^m$ selections.

Compared to a case where a network side directly configuring 2 measurement resource groups (corresponding to 2 transmission reception points (TRPs)) for the terminal to perform measurement reporting, the terminal selecting the second measurement resource group set from the first measurement resource group set allows the terminal to configure more than 2 measurement resource groups in the first measurement resource group set to support more than 2 TRPs to serve the terminal. Furthermore, a process of the terminal selecting the measurement resource group is also a process of selecting the TRP, and a TRP with better beam quality may be selected.

Based on the selected second measurement resource group set, the terminal performs one measurement report to the network side. The report includes at least the measurement values and the indication information. The network side needs to know which measurement resource groups the terminal selected and the correspondences between the measurement resource groups and the reported measurement values. Therefore, the indication information may be used by the network side to determine the correspondences between measurement resource groups in the second measurement resource group set and the measurement values, and/or the indication information may be used by the network side to determine measurement resource groups corresponding to the measurement values. The indication information includes, for example, a channel state information reference signal resource indicator (CSI-RS Resource Indicator, CRI), a synchronization signal block resource indicator (SSBRI), etc., and the measurement value includes, for example, layer 1 reference signal receiving power (L1-RSRP) or a layer 1 signal to interference plus noise ratio (L1-SINR), etc. The content indicated by the indication information may be associated with the second measurement resource group set, or may be associated with the correspondences between the reported measurement values and the measurement resource groups.

The embodiments of the present application provide a measurement reporting method. In the method, a first measurement resource group set is configured on network side, and the terminal selects a second measurement resource group set from the first measurement resource group set, and reports measurement values and indication information to the network side. The indication information is used for determining correspondences between the measurement values and measurement resource groups and/or determining measurement resource groups corresponding to the measurement values. The measurement reporting method enables the terminal to report beam information of multiple TRP joint transmissions in one report, where a number of reported measurement resource groups is determined by the terminal. The measurement reporting method is more suitable for terminal-centric transmission systems, effectively improving measurement efficiency and reducing measurement delay.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In an embodiment, the purpose of the terminal reporting indication information is to allow the network side to specify the measurement value reported by the terminal and the measurement resource corresponding to the measurement value. The direct correspondence between the measurement value and the measurement resource group may be as follows.

① Each measurement value corresponds to one measurement resource group in a second measurement resource group set, different measurement values correspond to same or different second measurement resource group sets, and different measurement values correspond to same or different measurement resource groups. That is, in one measurement report, the terminal reports one or more measurement values, and at the same time, the terminal reports one or more second measurement resource group sets. If the terminal reports only one second measurement resource group set, the measurement resource group corresponding to each measurement value is selected from this second measurement resource group set. The measurement resource groups corresponding to different measurement values may be the same or different. If the terminal selects/reports multiple second measurement resource group sets, the second measurement resource group sets corresponding to different measurement values may be different.

② Each reporting group corresponds to a second measurement resource group set, different reporting groups correspond to different second measurement resource group sets. For example, if each reporting group contains 4 measurement values, they correspond to measurement resource groups 3, 4, 2, and 5, respectively. Measurement values in other reporting groups may correspond to measurement resource groups 7, 8, 9, and 10. Accordingly, in one reporting group, different measurement values may correspond to the same or different measurement resource groups.

③ A reporting group set corresponds to one second measurement resource group set, a reporting group in the reporting group set corresponds to one measurement resource group in the second measurement resource group set, and measurement resource groups corresponding to different reporting groups may be the same, for example, all corresponding to measurement resource groups 3, 4, 2, and 5. In an embodiment, a reporting group set may include one or more reporting groups. In an embodiment, reporting groups in a reporting group set may include all or some of reporting groups in a group-based measurement report.

In actual implementation, there may be various correspondences between measurement values and measurement resource groups, and the embodiments of the present application do not limit or exhaustively list the specific correspondences. In the embodiments of the present application, the terminal may enable the network side to specify the indication information through the indication information or a combination of the indication information and a predefined rule.

In some embodiments, the correspondence is determined based on the indication information, or the correspondence is determined based on the indication information and a predefined rule.

In an embodiment, a purpose of the terminal reporting the indication information is to enable the network side to specify the correspondence between the indication information or the measurement value and the measurement resource group. This means that the network may specify which measurement resource groups and resources the terminal has selected for measurement reporting, and which measurement resource or measurement resource group each measurement value corresponds to. In a case where all measurement resource groups have the same resource index, if the network configures 4 measurement resource groups for the terminal, each including 32 measurement resources, and measurement resource indexes in each measurement resource group range from 0 to 31, the network cannot determine the measurement resource group corresponding to reported resource indication based on the resource indication (e.g., a channel state information reference signal resource indicator, CRI) alone. Therefore, information on measurement resource groups or a measurement resource group set is required.

The terminal may then directly indicate the correspondence in the indication information, and the network may directly determine the correspondence based on the indication information. In an embodiment, the terminal may not directly specify the correspondence in the indication information, but instead may indicate relevant information about the second measurement resource group set, and the network side may specify the correspondence by combining the indication information and a predefined rule.

When the indication information is used to determine a measurement resource group corresponding to a measurement value, the indication information may also be used to directly indicate the measurement resource group corresponding to the measurement value, or the corresponding measurement resource group may be determined by combining the indication information and the predefined rule.

In some embodiments, determining the second measurement resource group set from the first measurement resource group set includes:

determining the second measurement resource group set from the first measurement resource group set based on network side configuration or a predefined rule.

In an embodiment, the terminal determines the second measurement resource group set from the first measurement resource group set, and may determine the second measurement resource group set based on a network side configuration or determine itself the second measurement resource group set based on a predefined rule.

Compared to a case where a network side directly configuring 2 measurement resource groups (corresponding to 2 transmission reception points (TRPs)) for the terminal to perform measurement reporting, in the measurement reporting method provided by the embodiments of the present application, the terminal selecting the second measurement resource group set from the first measurement resource group set allows the terminal to configure more than 2 measurement resource groups in the first measurement resource group set to support more than 2 TRPs to serve the terminal. Furthermore, a process of the terminal selecting the measurement resource group is also a process of selecting the TRP, and a TRP with better beam quality may be selected.

In some embodiments, in a case where the terminal performs group-based measurement reporting, determining the second measurement resource group from the first measurement resource group includes:

determining, from the first measurement resource group set, a second measurement resource group set corresponding to a reporting group selected by the terminal, where different reporting groups correspond to same or different second measurement resource group sets; or

determining, from the first measurement resource group set, second measurement resource group sets corresponding to all reporting groups selected by the terminal.

In an embodiment, in a group-based measurement report, the terminal may select only one second measurement resource group set, which applies to all reporting groups in one measurement report. Furthermore, different reporting groups correspond to the same or different measurement resource groups in the second measurement resource group set.

In an embodiment, if the terminal selects multiple second measurement resource group sets, second measurement resource group sets corresponding to different reporting groups may be the same or different.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In the embodiments of the present application, a measurement resource group set configured by the network side is referred to as the first measurement resource group set, a measurement resource group set selected by the terminal is referred to as the second measurement resource group set, and a measurement resource group set not selected by the terminal is referred to as the third measurement resource group set.

In the indication information, the terminal may explicitly indicate the second measurement resource group set or implicitly indicate the third measurement resource group set, allowing the network side to specify the second measurement resource group set selected by the terminal.

In an embodiment, the indication information may include indexes of multiple measurement resource groups.

In an embodiment, the indication information may also indicate the measurement resource group corresponding to the maximum measurement value, which should be included in the second measurement resource group set. In an embodiment, the indication information may include an index of the measurement resource group corresponding to the maximum measurement value.

The measurement reporting method provided by the embodiment of the present application enables the network side to obtain relevant information of the measurement resource group selected by the terminal side by indicating the second measurement resource group set selected by the terminal, the third measurement resource group set not selected by the terminal, and the measurement resource group corresponding to the maximum measurement value in the indication information, so as to specify which TRPs are selected by the UE or which TRPs have better measurement results. The measurement reporting method is suitable for terminal-centric transmission systems, effectively improving measurement efficiency, and reducing measurement delay.

In some embodiments, reporting the indication information to the network device includes:

in a case where the indication information indicates the second measurement resource group set or the indication information indicates the third measurement resource group set, the indication information is reported by T1 bits, where T1 is a positive integer.

In an embodiment, when the terminal reports indication information, and the indication information indicating the second measurement resource set selected by the terminal or indicating the third measurement resource set not selected by the terminal, the indication information may be reported using bits. For example, the indication information may be reported using T1 bits, where T1 is a positive integer.

In some embodiments, in a case where the indication information is used to indicate the measurement resource group corresponding to the maximum measurement value and the second measurement resource group set, reporting the indication information to the network device includes:

indicating the measurement resource group corresponding to the maximum measurement value using T2 bits and indicating other measurement resource groups in the second measurement resource group set except for the measurement resource group corresponding to the maximum measurement value using T3 bits, where T2 and T3 are positive integers; or

indicating the second measurement resource group set using T4 bits and indicating the measurement resource group corresponding to the maximum measurement value in the second measurement resource group set using T5 bits, where T4 and T5 are positive integers.

In an embodiment, in a case where the indication information indicates the second measurement resource group set and the measurement resource group corresponding to the maximum measurement value, the indication information may include the measurement resource group corresponding to the maximum measurement value and other measurement resource groups in the second measurement resource group set except for the measurement resource group corresponding to the maximum measurement value. In another embodiment, the indication information may include the measurement resource group corresponding to the maximum measurement value and the second measurement resource group set.

In an embodiment, the indication information is indicated using bits. For example, the measurement resource group corresponding to the maximum measurement value is indicated and determined using T2 bits and other measurement resource groups in the second measurement resource group set except for the measurement resource group corresponding to the maximum measurement value are indicated and determined using T3 bits. For another example, the second measurement resource group set is indicated using T4 bits and the measurement resource group corresponding to the maximum measurement value in the second measurement resource group set is indicated using T5 bits, For another example, the second measurement resource group set is indicated using T bits, and the measurement resource group indicated by the first bit of the T bits is indicated as the measurement resource group corresponding to the maximum measurement value. For another example, the second measurement resource group set is indicated using T bits, and the measurement resource group indicated by the last bit or a designated bit of the T bits is indicated as the measurement resource group corresponding to the maximum measurement value. For another example, the second measurement resource group set is indicated using T bits, and assuming that the second measurement resource group includes M measurement resource groups, the measurement resource group corresponding to the maximum measurement value is indicated using $\lceil \log_2 K \rceil$ bits.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In an embodiment, in addition to indicating relevant information regarding the second measurement resource group set selected by the terminal, the terminal may also indicate the measurement resource group set used for channel measurement and the measurement resource group set used for interference measurement. The same measurement resource group cannot be used for both channel and interference measurements.

The second measurement resource set selected by the terminal (denoted as Set A) consists of two parts: the measurement resource group set used for channel measurement (denoted as Set A1) and the measurement resource group set used for interference measurement (denoted as Set A2). The relationship among the three is: set A = set A1 + set A2. The indication information indicates at least two of the three items. The network side obtains information on at least two of these items, and then the measurement resource group set used for channel measurement and the measurement resource group set used for interference measurement may be clearly identified.

The measurement reporting method provided by the embodiment of the present disclosure indicates at least two of the second measurement resource group set, the measurement resource group set for channel measurement, or the measurement resource group set for interference measurement through indication information, so that the network side may specify the measurement resource group set for channel measurement and the measurement resource group set for interference measurement, and further obtain corresponding measurement values, which may effectively reflect the interference between beams of multiple TRPs.

In some embodiments, in a case where the correspondence is determined based on the indication information, the indication information is used to indicate the correspondence.

In an embodiment, the correspondence between the measurement value and the measurement resource group may be directly indicated, on the terminal side, through indication information. The indication method and content may refer to any of the aforementioned embodiments.

The embodiments of the present application provide a measurement reporting method. In the method, a first measurement resource group set is configured on network side, and the terminal selects a second measurement resource group set from the first measurement resource group set, and reports measurement values and indication information to the network side. The indication information is used for determining correspondences between the measurement values and measurement resource groups and/or determining measurement resource groups corresponding to the measurement values. The measurement reporting method enables the terminal to report beam information of multiple TRP joint transmissions in one report, where a number of reported measurement resource groups is determined by the terminal. The measurement reporting method is more suitable for terminal-centric transmission systems, effectively improving measurement efficiency and reducing measurement delay.

In some embodiments, reporting the measurement value to the network device includes:
reporting layer 1 reference signal received power, L1-RSRP and/or a layer 1 signal to interference plus noise ratio, L1-SINR to the network device.

In an embodiment, the measurement value reported by the terminal to the network side may be L1-RSRP or L1-SINR, or both.

In some embodiments, reporting the L1-RSRP and/or the L1-SINR to the network device includes:

in a case where a measurement resource group set used for interference measurement is an empty set or the indication information indicates only a measurement resource group set used for channel measurement, reporting the L1-RSRP to the network device;

in a case where a measurement resource group set used for interference measurement is a non-empty set or the indication information indicates a measurement resource group set used for interference measurement, reporting the L1-SINR to the network device; or

in a case where a measurement resource group set used for interference measurement is a non-empty set or the indication information indicates a measurement resource group set used for interference measurement, reporting the L1-RSRP and the L1-SINR to the network device.

In an embodiment, in a case where a measurement resource group set used for interference measurement is an empty set or the indication information only indicates a measurement resource group set used for channel measurement, that is, in a case where there is no interference source, the terminal only needs to report L1-RSRP to the network device.

In a case where a measurement resource group set used for interference measurement is a non-empty set or the indication information indicates a measurement resource group set used for interference measurement, that is, in a case where there is an interference source, the terminal needs to report the L1-SINR to the network device. At this time, the L1-SINR may be reported to the network device, or the L1-RSRP and L1-SINR may be reported to the network device.

In some embodiments, reporting the L1-RSRP and the L1-SINR to the network device includes:

reporting the L1-RSRP and the L1-SINR to the network device in a non-differential reporting manner; or

reporting the L1-RSRP and the L1-SINR to the network device in a differential reporting manner, where a differential is respectively performed between L1-RSRP, and between L1-SINRs.

In an embodiment, in a case where the terminal reports both the L1-RSRP and the L1-SINR, non-differential reporting is performed between the L1-RSRP and the L1-SINR.

In an embodiment, a differential is respectively performed between L1-RSRP, and between L1-SINRs.

In an embodiment, the maximum L1-RSRP and maximum L1-SINR may be quantized using more bits.

For example, in a case where differential reporting is used, to indicate the correspondence between the maximum measured value and the measurement resource group, $\lceil \log_2 K \rceil$ bits may be used to indicate which measurement resource group has the maximum measurement value. The maximum measurement value is reported in a non-differential manner (e.g., 7 bits), while other measurement values are reported in a differential manner (e.g., 4 bits).

The measurement reporting provided by the embodiments of the present disclosure supports reporting of L1-RSRP and L1-SINR in multi-TRP scenarios, non-differential reporting between L1-RSRP and L1-SINR, differential reporting between L1-RSRP, and differential reporting between L1-SINR. The measurement reporting of L1-SINR may effectively reflect the interference between beams of multiple TRPs.

In some embodiments, in a case where the measurement value includes the L1-SINR, reporting the measurement value to the network device includes:

determining the L1-SINR based on at least two of an indicated measurement resource group, a measurement resource group used for channel measurement, or a measurement resource group used for interference measurement, and reporting the L1-SINR to the network device;

in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,

in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

In an embodiment, in related art, both non-group-based measurement reporting and group-based measurement reporting with N=1 support L1-RSRP and L1-SINR reporting. Group-based measurement reporting with N>1 does not support L1-SINR reporting and cannot reflect interference between beams of TRPs. Therefore, the present application focuses on L1-SINR reporting in multiple TRP scenarios.

For L1-SINR reporting, measurement reports may include the followings.

① Determining one L1-SINR based on at least two of an indicated measurement resource group, a measurement resource group used for channel measurement, or a measurement resource group used for interference measurement, and reporting the one L1-SINR to the network device.

In non-group-based measurement reporting, only one L1-SINR may be reported in one measurement report. In group-based measurement reporting, regardless of whether there is one or multiple reporting groups, each reporting group may report only one L1-SINR. The one L1-SINR is determined based on at least two of the indicated measurement resource group, the measurement resource group used for channel measurement, or the measurement resource group used for interference measurement.

② In a case where one reporting group corresponds to a measurement resource group, determining a nth L1-SINR based on an nth measurement resource used for channel measurement and other measurement resources used for interference measurement except for the nth measurement resource in the measurement resource group; and reporting multiple L1-SINRs corresponding to the one reporting group to the network device.

In group-based measurement reporting, one reporting group may correspond to one measurement resource group. One reporting group may report multiple L1-SINRs, with different L1-SINRs corresponding to different measurement resources within the measurement resource group. An nth L1-SINR among the multiple L1-SINRs is determined based on the nth measurement resource used for channel measurement and other measurement resources used for interference measurement except for the nth measurement resource in the measurement resource group.

③ In a case where one reporting group corresponds to one second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the one reporting group to the network device.

In group-based measurement reporting, one reporting group may correspond to one second measurement resource group set. One reporting group may report multiple L1-SINRs, with different L1-SINRs corresponding to different measurement resource groups in the second measurement resource group set. An mth L1-SINR among the multiple L1-SINRs is determined based on an mth measurement resource group used for channel measurement and other measurement resource groups used for interference measurement except for the mth measurement resource group in the second measurement resource group set.

The measurement reporting method provided by the embodiment of the present application supports measurement reporting of L1-SINR in different reporting scenarios, thereby effectively reflecting the interference between different beams in multiple TRP scenarios.

In some embodiments, the first measurement resource group set includes K measurement resource groups, where K is greater than 2.

The embodiments of the present application are suitable for scenarios with more than two TRPs or scenarios with at most two TRPs.

In scenarios with more than two TRPs, the first measurement resource set configured by the network side includes K measurement resource groups, and each measurement resource group corresponds to one TRP, where K is greater than 2.

The embodiments of the present application provide a measurement reporting method. In the method, a first measurement resource group set is configured on network side, and the terminal selects a second measurement resource group set from the first measurement resource group set, and reports measurement values and indication information to the network side. The indication information is used for determining correspondences between the measurement values and measurement resource groups and/or determining measurement resource groups corresponding to the measurement values. The measurement reporting method enables the terminal to report beam information of multiple TRP joint transmissions in one report, where a number of reported measurement resource groups is determined by the terminal. The measurement reporting method is more suitable for terminal-centric transmission systems, effectively improving measurement efficiency and reducing measurement delay.

FIG. 2 is a second schematic flow chart of a measurement reporting method according to an embodiment of the present application. As shown in FIG. 2, the method may be performed by a network device, for example, 6G base station. The method includes:

S201: transmitting configuration information to a terminal, where the configuration information includes a first measurement resource group set;

S202: receiving a measurement value and indication information reported by the terminal;

S203: determining, based on the indication information, a correspondence between a measurement resource group in a second measurement resource group set and the measurement value, and/or determining, based on the indication information, a measurement resource group corresponding to the measurement value.

The second measurement resource group set is selected from the first measurement resource group set.

In the embodiment of the present application, the network device transmits configuration information to the terminal. The configuration information includes a first measurement resource group set. The first measurement resource group set includes multiple measurement resource groups, for example, K measurement resource groups, where K is greater than or equal to 2. The present application mainly describes a case where K is greater than 2.

Compared with a case where the network side directly configures two measurement resource groups (corresponding to 2 TRPs) for the terminal to perform measurement reporting, the first measurement resource group set may include more than 2 measurement resource groups for the terminal to select.

The network side receives the measurement report performed by the terminal based on .the selected second measurement resource group set. The report includes at least the measurement values and the indication information. The network side determines, based on the indication information, a correspondence between a measurement resource group in a second measurement resource group set and the measurement value, and/or determines, based on the indication information, a measurement resource group corresponding to the measurement value. The indication information includes, for example, a channel state information reference signal resource indicator (CSI-RS Resource Indicator, CRI), a synchronization signal block resource indicator (SSBRI), etc., and the measurement value includes, for example, layer 1 reference signal receiving power (L1-RSRP) or a layer 1 signal to interference plus noise ratio (L1-SINR), etc. The content indicated by the indication information may be associated with the second measurement resource group set, or may be associated with the correspondences between the reported measurement values and the measurement resource groups.

In an embodiment, the network side may perform flexible scheduling based on the measurement values and the correspondences between the measurement values and the measurement resource groups.

The embodiments of the present application provide a measurement reporting method. In the method, the network side configures a first measurement resource group set, and receives the indication information and the measurement value reported by the terminal based on the second measurement resource group set selected from the first measurement resource group set. The measurement reporting method enables the terminal to report beam information of multiple TRP joint transmissions in one report, where a number of reported measurement resource groups is determined by the terminal. The measurement reporting method is more suitable for terminal-centric transmission systems, effectively improving measurement efficiency and reducing measurement delay. The network side may obtain the correspondence between the measurement value and the measurement resource group, and then flexibly schedule transmission based on the measurement results.

In some embodiments, determining, based on the indication information, a correspondence between a measurement resource group in a second measurement resource group set and the measurement value, includes:

determining the correspondence based on the indication information; or
determining the correspondence based on the indication information and a predefined rule.

In an embodiment, the network side may specify, based on the indication information reported by the terminal, the correspondence between the indication information or the measurement value and the measurement resource group.

This means that the network may specify which measurement resource groups the terminal has selected for measurement reporting, and which measurement resource group each measurement value corresponds to.

The terminal may then directly indicate the correspondence in the indication information, and the network may directly determine the correspondence based on the indication information. In an embodiment, the terminal may not directly specify the correspondence in the indication information, but instead may indicate relevant information about the second measurement resource group set, and the network side may determine the correspondence by combining the indication information and a predefined rule.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In an embodiment, the purpose of the terminal reporting indication information is to allow the network side to specify the measurement value reported by the terminal and the measurement resource corresponding to the measurement value. The direct correspondence between the measurement value and the measurement resource group may be as follows.

① Each measurement value corresponds to one measurement resource group in a second measurement resource group set, different measurement values correspond to same or different second measurement resource group sets, and different measurement values correspond to same or different measurement resource groups. That is, in one measurement report, the terminal reports one or more measurement values, and the terminal selects one or more second measurement resource group sets. If the terminal selects only one second measurement resource group set, the measurement resource group corresponding to each measurement value is selected from this second measurement resource group set. The measurement resource groups corresponding to different measurement values may be the same or different. If the terminal selects multiple second measurement resource group sets, the second measurement resource group sets corresponding to different measurement values may be different.

② Each reporting group corresponds to one second measurement resource group set, different reporting groups correspond to same or different second measurement resource group sets, different measurement values in a reporting group correspond to measurement resource groups in a second measurement resource group set, and different measurement values in each reporting group correspond to same or different measurement resource groups. That is, in one group-based measurement report, each reporting group corresponds to one second measurement resource group set. If the terminal only selects one second measurement resource group set, the second measurement resource group set applies to all reporting groups in this measurement report. If the terminal selects multiple second measurement resource group sets, the second measurement resource group sets corresponding to different reporting groups in this measurement report may be different. Accordingly, in one reporting group, different measurement values may correspond to the same or different measurement resource groups.

③ All reporting groups correspond to one second measurement resource group set, each reporting group corresponds to one measurement resource group in the second measurement resource group set, and different reporting groups correspond to same or different measurement resource groups. That is, in one group-based measurement report, the terminal only selects one second measurement resource group set, the second measurement resource group set applies to all reporting groups. Each reporting group corresponds to a measurement resource group in this second measurement resource group set, and different reporting groups correspond to same or different measurement resource groups.

In actual implementation, there may be various correspondences between measurement values and measurement resource groups, and the embodiments of the present application do not limit or exhaustively list the specific correspondences. In the embodiments of the present application, the terminal may enable the network side to specify the indication information through the indication information or a combination of the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In the embodiments of the present application, a measurement resource group set configured by the network side is referred to as the first measurement resource group set, a measurement resource group set selected by the terminal is referred to as the second measurement resource group set, and a measurement resource group set not selected by the terminal is referred to as the third measurement resource group set.

The network side may specify the second measurement resource group set selected by the terminal through the indication information. The terminal may directly indicate the second measurement resource group set in an explicit manner or indicate the third measurement resource group set in an implicit manner.

In an embodiment, the indication information may include indexes of multiple measurement resource groups.

In an embodiment, the indication information may also indicate the measurement resource group corresponding to the maximum measurement value, which should be included in the second measurement resource group set. In an embodiment, the indication information may include an index of the measurement resource group corresponding to the maximum measurement value.

The measurement reporting method provided by the embodiment of the present application enables the network side to obtain relevant information of the measurement resource group selected by the terminal side by indicating the second measurement resource group set selected by the terminal, the third measurement resource group set not selected by the terminal, and the measurement resource group corresponding to the maximum measurement value in the indication information, so as to specify which TRPs are selected by the UE or which TRPs have better measurement results. The measurement reporting method is suitable for terminal-centric transmission systems, effectively improving measurement efficiency, and reducing measurement delay.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In an embodiment, in addition to indicating relevant information regarding the second measurement resource group set selected by the terminal, the indication information may also indicate the measurement resource group set used for channel measurement and the measurement resource group set used for interference measurement. The same measurement resource group cannot be used for both channel and interference measurements.

The second measurement resource set selected by the terminal (denoted as Set A) consists of two parts: the measurement resource group set used for channel measurement (denoted as Set A1) and the measurement resource group set used for interference measurement (denoted as Set A2). The relationship among the three is: set A = set A1 + set A2. The indication information indicates at least two of the three items. The network side obtains information on at least two of these items, and then the measurement resource group set used for channel measurement and the measurement resource group set used for interference measurement may be clearly identified.

The measurement reporting method provided by the embodiment of the present disclosure indicates at least two of the second measurement resource group set, the measurement resource group set for channel measurement, or the measurement resource group set for interference measurement through indication information, so that the network side may specify the measurement resource group set for channel measurement and the measurement resource group set for interference measurement, and further obtain corresponding measurement values, which may effectively reflect the interference between beams of multiple TRPs.

In some embodiments, receiving the measurement value reported by the terminal includes:
receiving layer 1 reference signal received power, L1-RSRP and/or a layer 1 signal to interference plus noise ratio, L1-SINR reported by the terminal.

In an embodiment, the network side receives the measurement value reported by the terminal, which may be L1-RSRP or L1-SINR, or both.

In some embodiments, in a case where the measurement value includes the L1-SINR, receiving the measurement value reported by the terminal includes:

receiving an L1-SINR corresponding to a reporting group reported by the terminal, where the L1-SINR corresponding to the reporting group is determined based on at least two of a measurement resource group corresponding to the reporting group, a measurement resource group used for channel measurement, or a measurement resource group used for interference measurement;

receiving multiple L1-SINRs corresponding to a reporting group reported by the terminal, where the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or

receiving multiple L1-SINRs corresponding to a reporting group reported by the terminal, where the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

In an embodiment, the reporting of L1-SINR may include the followings.

① Receiving one L1-SINR corresponding to one reporting group reported by the terminal, the one L1-SINR being determined based on at least two of a measurement resource group corresponding to one reporting group, a measurement resource group used for channel measurement, or a measurement resource group used for interference measurement.
In non-group-based measurement reporting, only one L1-SINR may be reported in one measurement report. In group-based measurement reporting, regardless of whether there is one or multiple reporting groups, each reporting group may report only one L1-SINR. The one L1-SINR is determined based on at least two of the indicated measurement resource group, the measurement resource group used for channel measurement, or the measurement resource group used for interference measurement.

② Receiving multiple L1-SINRs corresponding to one reporting group reported by the terminal, one reporting group corresponding to one measurement resource group, an nth L1-SINR among the multiple L1-SINRs being determined based on an nth measurement resource used for channel measurement and other measurement resources used for interference measurement except for the nth measurement resource in the measurement resource group.
In group-based measurement reporting, one reporting group may correspond to one measurement resource group. One reporting group may report multiple L1-SINRs, with different L1-SINRs corresponding to different measurement resources within the measurement resource group. An nth L1-SINR among the multiple L1-SINRs is determined based on the nth measurement resource used for channel measurement and other measurement resources used for interference measurement except for the nth measurement resource in the measurement resource group.

③ Receiving multiple L1-SINRs corresponding to one reporting group reported by the terminal, one reporting group corresponding to one second measurement resource group set, an mth L1-SINR among the multiple L1-SINRs being determined based on an mth measurement resource group used for channel measurement and other measurement resource groups used for interference measurement except for the mth measurement resource group in the second measurement resource group set.

In group-based measurement reporting, one reporting group may correspond to one second measurement resource group set. One reporting group may report multiple L1-SINRs, with different L1-SINRs corresponding to different measurement resource groups in the second measurement resource group set. An mth L1-SINR among the multiple L1-SINRs is determined based on the mth measurement resource group used for channel measurement and other measurement resource groups used for interference measurement except for the mth measurement resource group in the second measurement resource group set.

The measurement reporting method provided by the embodiment of the present application supports measurement reporting of L1-SINR in different reporting scenarios, thereby effectively reflecting the interference between different beams in multiple TRP scenarios.

The following further describes solutions of the embodiments of the present application through several specific examples.

Example 1. The network side configures one reporting setting for a UE and associates it with a CSI resource setting. The CSI resource setting includes K measurement resource groups, where K > 2. The network side configures the UE to report L1-RSRP or L1-SINR.

Optionally, the UE uses a group-based measurement reporting method, such as reporting N beam groups or N groups of beam information. Each beam group contains M beam pairs, or each group of beam information includes M pieces of beam information, where M is less than or equal to K. That is, the UE selects M measurement resource groups or M measurement resources from the K measurement resource groups as a group for reporting, and the M measurement resource groups or M measurement resources may be received by the UE at the same time. For example, the UE uses one receiving filter to receive them at the same time, or uses multiple receiving filters to receive them at the same time. This is not limited in the embodiments of the present application.

In addition to reporting the CRI/SSBRI and measurement values (L1-RSRP or L1-SINR), the UE should also report the selected measurement resource group index to the network side. The index indicates which TRPs the UE has selected or which TRPs have relatively good measurement results. This allows the network side to determine which TRPs to use based on the UE's report.

For L1-RSRP reporting, all selected measurement resource groups are used for channel measurement, so there's no need to distinguish between signal sources and interference sources. The specific measurement reporting method is as follows.

Step 1. The UE receives network side configurations, including reporting settings configuration, measurement resource configuration (a CSI resource setting includes K measurement resource groups) and so on.

Step 2. Based on the network side configurations or a predefined rule, the UE selects M measurement resource groups from the K measurement resource groups and N groups of measurement resources for reporting. The number of selected resources in each group may be equal or unequal.

Case 1-1. The predefined rule is that the number of resources in each reporting group is equal, and the resources in each reporting group come from a same measurement resource group.

For example, if K = 4, the UE measures the beam information of 4 TRPs in one measurement. Due to the varying distances between the 4 TRPs and the UE, the beam quality of 3 of the 4 TRPs is significantly better than that of the remaining one TRP. Thus, three TRPs are selected for reporting from the multiple resource groups or beams reported by the UE. In this case, the measurement resource group sets selected by multiple reporting groups may be collectively indicated.

Method 1. Using multiple (greater than or equal to K) bits to indicate the measurement resource group corresponding to the measurement value, i.e., the reported measurement resource group.

For example, K bits are used through bit mapping to indicate the measurement resource group corresponding to the measurement value. If all resources in the reporting group are from TRP 1, TRP 2, and TRP 4, i.e., the first, second, and fourth measurement resource groups, the indication value for K bits is 1101.

In this case, the UE reports N groups of resources/beams, with each group including the number of resources/beams (M) equal to the number of indicators that are 1 in the bit mapping. For example, if M = 3, for the nth reporting group, the correspondence between CRI/SSBRI, measurement value, and measurement resource is as follows: a first CRI/SSBRI and measurement value (L1-RSRP or L1-SINR) corresponds to a first measurement resource group whose indicator is 1 in the bit mapping; a second CRI/SSBRI and measurement value (L1-RSRP or L1-SINR) corresponds to a second measurement resource group whose indicator is 1 in the bit mapping, and so on; an Mth CRI/SSBRI and measurement value (L1-RSRP or L1-SINR) corresponds to a last measurement resource group whose indicator is 1 in the bit mapping.

In a case where differential reporting is used, to indicate the correspondence between the maximum measured value and the measurement resource group, $\lceil \log_2 K \rceil$ bits may be used to indicate which measurement resource group has the maximum measurement value. The maximum measurement value is reported in a non-differential manner (e.g., 7 bits), while other measurement values are reported in a differential manner (e.g., 4 bits). The UE may report the maximum measurement value in the first reporting group. The specific reporting format is shown in Table 1:

Table 1

| CSI report number | CSI field |
|---|---|
| CSI report #n | K bits bit mapping |
| | $\lceil \log_2 K \rceil$ bits indicate the measurement resource group corresponding to the maximum measurement value |
| | A first CRI or SSBRI of a first measurement resource group whose indicator is 1 in the bit mapping (if reported) |
| | ... |
| | An Nth CRI or SSBRI of a first measurement resource group whose indicator is 1 in the bit mapping (if reported) |
| | A first CRI or SSBRI of a second measurement resource group whose indicator is 1 in the bit mapping (if reported) |
| | ... |
| | An Nth CRI or SSBRI of a second measurement resource group whose indicator is 1 in the bit mapping (if reported) |
| | A first CRI or SSBRI of an Mth measurement resource group whose indicator is 1 in the bit mapping (if reported) |
| | ... |
| | An Nth CRI or SSBRI of an Mth measurement resource group whose indicator is 1 in the bit mapping (if reported) |
| | A measurement value corresponding to a first CRI or SSBRI of a first measurement resource group whose indicator is 1 in the bit mapping (if reported) |
| | ... |
| | A measurement value corresponding to an Nth CRI or SSBRI of a first measurement resource group whose indicator is 1 in the bit mapping (if reported) |
| | A measurement value corresponding to a first CRI or SSBRI of a second measurement resource group whose indicator is 1 in the bit mapping (if reported) |
| | ... |
| | A measurement value corresponding to an Nth CRI or SSBRI of a second measurement resource group whose indicator is 1 in the bit mapping (if reported) |
| | A measurement value corresponding to a first CRI or SSBRI of an Mth measurement resource group whose indicator is 1 in the bit mapping (if reported) |
| | ... |
| | A measurement value corresponding to an Nth CRI or SSBRI of an Mth measurement resource group whose indicator is 1 in the bit mapping (if reported) |

Another correspondence between CRI/SSBRI or measurement value and measurement resource is: for the first group of resources/beam reporting (i.e., the first reporting group), the first measurement value is the maximum measurement value, and the measurement resource group corresponding to the first measurement value is indicated by $\lceil \log_2 K \rceil$, the second measurement value corresponds to the first measurement resource group whose indicator is 1 in the bit mapping, except for the maximum measurement value or the measurement resource group corresponding to the maximum measurement value; and so on, the Mth measurement value corresponds to the last measurement resource group whose indicator is 1 in the bit mapping, except for the maximum measurement value or the measurement resource group corresponding to the maximum measurement value.

For another example, the network side configures a total of P potential measurement resource group sets for the UE, such as P=8, and the combinations are {1,2,3,4}, {1,2,3}, {1,3,4}, {1,2,4}, {2,3,4}, {1,2}, {3,4} and {2,4}. The UE may use $\lceil \log_2 P \rceil$ bits to indicate the reported measurement resource group combination or set. Accordingly, the CRI/SSBRI and measurement value reported by the UE correspond to the resources/beams in the reported measurement resource group combination. The CRI/SSBRI may be reported in an order of the measurement resource groups indicated in the measurement resource group combination. Also, the CRI/SSBRI and measurement value in the measurement resource group corresponding to the maximum measurement value may be reported first, and then the CRI/SSBRI and measurement values corresponding to other measurement resource groups included in the measurement resource group combination except the measurement resource group corresponding to the maximum measurement value may be reported.

For another example, the UE performs joint encoding on all possible measurement resource group sets, and uses $\mathrm{T} = \left[\log_2 \sum_{M=1}^{K} C_K^M\right]$ to indicate the UE to select sets, where $C_K^M$ is a number of sets corresponding to M measurement resource groups selected from K measurement resource groups. In this way, the UE may select any number of measurement resource groups for reporting in one report. The UE may report in ascending order of measurement resource group indexes.

Method 2. Using multiple bits to indicate measurement resource groups not included in the report.

When there are many measurement resource groups and the UE select a large number of measurement resource groups, signaling overhead may be reduced by having the UE indicate unused measurement resource groups. For example, when K=4, if the UE reports at least 3 measurement resource group sets, the UE may report one of the following combinations of unused measurement resource groups: {1}, {2}, {3}, {4}, and {∅}, where {∅} represents an empty set, meaning all measurement resource groups are reported.

Method 3. Joint indication (reporting) method for selected measurement resource groups and the resource group corresponding to the maximum measurement value.

For example, using [$\log_2 K$] bits to indicate which measurement resource group has the maximum measurement value. In this case, it indicates that the measurement resource group has been selected. Therefore, K-1 bits may be used through bit mapping to indicate other selected measurement resource groups.

For another example, using [$\log_2 K$] bits to indicate which measurement resource group has the maximum measurement value, and then using method 1 or 2 to indicate the measurement resource group set except for the measurement resource group corresponding to the maximum measurement value. For example, the current measurement resource group set to be selected is the potential measurement resource group set configured on the network side, or all measurement resource group sets except for the maximum measurement resource group, or the measurement resource groups reported by the UE not included in the measurement resource group sets except for the maximum measurement resource group.

For another example, using T bits to indicate the measurement resource group selected by the UE (method 1). For example, if the number of measurement resource groups selected by the UE is M, then use [$\log_2 M$] bits to indicate which measurement resource group has the maximum measurement value among the selected measurement resource groups.

Case 1-2. A predefined rule may specify different measurement resource groups for each reporting group. The number of corresponding resources/beams may be equal or unequal.

During measurement, although the distance between each TRP and the UE may differ, the difference in beam direction may significantly impact the overall measurement value. This may result in some beam combinations of certain TRPs having better quality, while others have poorer quality, i.e., lower quality than other TRP combinations. Thus, multiple resource/beam groups reported by the UE corresponding to different TRPs may provide the network side with more high-quality beam combinations.

The reporting of measurement resource group combinations within each reporting group may follow methods 1 to 3 in case 1.

Furthermore, the number of measurement resource groups included in each reporting group may be different. Alternatively, to ensure fixed UCI signaling overhead, it may be specified that each reporting group includes an equal number of measurement resource groups, but the measurement resource group combinations reported by each reporting group may be different.

Example 2. The network side configures one reporting setting for a UE and associates it with a CSI resource setting. The CSI resource setting includes K measurement resource groups, where K > 2. The network side configures the UE to perform non-group-based measurement reporting for L1-SINR.

In addition to indicating the measurement resource group selected by the UE, the UE may also indicate which measurement resource group is used as a useful signal (i.e., for channel measurement) and which measurement resource group is used as an interference signal (i.e., for interference measurement) in this measurement report. In this way, the network side may determine, based on the UE's report, which TRPs corresponding to the measurement resource groups are suitable for joint transmission and which TRPs corresponding to the measurement resource groups are not suitable for joint transmission, etc.

When performing non-group-based measurement reporting, the UE may report M pieces of beam information, including resource/beam (CRI/SSBRI) and measurement values (L1-RSRP or L1-SINR), where M is configured by higher-layer signaling.

For each resource/beam report, the UE may also additionally indicate a corresponding channel measurement and/or interference measurement. For example, when K=4, the number of measurement resource groups used for channel measurement may be 1, 2, 3 or 4, and the number of measurement resource groups used for interference measurement may also be 1, 2, 3 or 4. For the same resource/beam reporting, the same measurement resource group may not be used for both channel measurement and interference measurement at the same time.

Case 2-1. Each resource/beam corresponds to one or more of the same measurement resource groups, or corresponds to one or more of the same measurement resource groups used for channel measurement and one or more of the same measurement resource groups used for interference measurement.

The UE may indicate a measurement resource group set using the methods in example 1. The measurement resource groups used for channel measurement and/or interference measurement may be indicated using following methods.

Method 1. Using multiple bits to indicate the measurement resource group used for channel measurement, with the remaining measurement resource groups being used for interference measurement.

Similar to example 1, via bit mapping, K1 bits may be used to indicate measurement resource groups used for channel measurement, or K1 bits may also be used to indicate measurement resource group sets used for channel measurement, or indicate all possible measurement resource group sets used for channel measurement (

$\left\lceil \log_2 \sum_{m=1}^{K1} C_{K1}^m \right\rceil$ bits).

When determining K1 bits, bit width of K1 bits may be determined based on the configured number of measurement resource groups (K) or the indicated number of measurement resource group sets (M). For example, the measurement resource group sets corresponding to the resources/beams reported by the UE in this report are 1, 2, and 4, then 3 bits may be used to indicate the measurement resource group set used for channel measurement to the network side via bit mapping.

The specific reporting format is shown in Table 2:

Table 2

| CSI report number | CSI field |
|---|---|
| CSI report #n | Measurement resource group set |
| | Measurement resource group set for channel measurement |
| | First CRI or SSBRI (if reported) |
| | Second CRI or SSBRI (if reported) |
| | ... |
| | An Mth CRI or SSBRI (if reported) |
| | Measurement value corresponding to the first CRI or SSBRI (if reported) |
| | Measurement value corresponding to the second CRI or SSBRI (if reported) |
| | ... |
| | Measurement value corresponding to an Mth CRI or SSBRI (if reported) |

Method 2. Using multiple bits to indicate the measurement resource group used for interference measurement, with the remaining measurement resource groups being used for channel measurement.

In method 2, the indication method is similar to method 1, only the content of the indication is different.

Case 2-2. Each resource/beam corresponds to one or more of the same measurement resource groups, but the measurement resource groups used for channel measurement or interference measurement for each resource/beam may be different.

In the case, the UE may indicate a measurement resource group set using the methods in example 1. The measurement resource group set is applicable to all reported resources/beams/measurement value. Furthermore, it is necessary to indicate, for each resource/beam/measurement value, the corresponding measurement resource group for channel measurement or the measurement resource group for interference measurement. For the indication of the channel measurement resource group or the interference measurement resource group corresponding to each resource/beam/measurement value, methods 1 and 2 in case 2-1 may continue to be used.

Case 2-3. The measurement resource group corresponding to each resource/beam may be different.

In the case, the UE needs to indicate, for each resource/beam/measurement value, at least two of the corresponding measurement resource group, the measurement resource groups for channel measurement or the measurement resource groups for interference measurement. In addition to the measurement resource group indication method in example 1 and the measurement resource group indication method for channel measurement or interference measurement in example 2, the following indication method is also supported.

Method 3. Using T1 bits to indicate the measurement resource group for channel measurement and using T2 bits to indicate the measurement resource group for interference measurement.

In this method, it is not necessary to indicate the measurement resource group corresponding to each resource/beam/measurement value. The network side may determine, based only on the indications of T1 and T2, which measurement resource groups provide better performance during joint transmission.

For example, the network side configures four measurement resource groups for the UE, that is measurement resource groups 1, 2, 3, and 4, corresponding to TRPs 1-4. In one report, the UE reports four resources/beams/measurement value, and the corresponding measurement resource groups for channel measurement and interference measurement are shown in Table 3.

Table 3

| Report Index | Resource Index | Channel Measurement Resource Group | Interference Measurement Resource Group | L1-SINR Measurement Value |
|---|---|---|---|---|
| 1 | CRI 1, CRI 9, CRI 2 | 1 and 2 | 3 | 35dB |
| 2 | CRI 8, CRI 2 | 1 | 3 | 30dB |
| 3 | CRI 21, CRI 8, CRI 11 | 2, 3, and 4 | 1 | 28dB |
| 4 | CRI 4, CRI 8 | 1 | 4 | 25dB |

For each measurement value, multiple CRIs or SSBRIs correspond to indicated channel measurement resource groups and interference measurement resource groups, respectively. That is, the CRI or SSBRI is an index of the resources within the corresponding measurement resource group. The existence of an interference measurement resource group or interference resource indicates that the corresponding measurement resource group and the measurement resource group used for the channel may be scheduled simultaneously. For example, for reporting index 1, measurement resource groups 1 and 2 may perform CJT joint transmission for UE 1, while measurement resource group 3 may simultaneously use CRI 2 (and its corresponding beam information) on the resources scheduled by UE 1 to serve another UE. This will not affect the normal transmission of UE 1.

Optionally, the resource/beam/measurement value reported by the UE may not correspond to an interference measurement resource group, or the interference measurement resource group may be an empty set. In this case, the measurement value is actually L1-RSRP, that is the UE will report both the L1-SINR value and the L1-RSRP value in one report. When performing joint reporting for L1-SINR and L1-RSRP, the maximum L1-SINR value and the maximum L1-RSRP value may both be quantized using a larger number of bits, that is there is no need to perform differential quantization on different measurement values, as shown in Table 4.

Table 4

| Report Index | Resource Index | Channel Measurement Resource Group | Interference Measurement Resource Group | Measurement Value |
|---|---|---|---|---|
| 1 | CRI 1, CRI 9, CRI 2 | 1 and 2 | 3 | L1-SINR=35dB |
| 2 | CRI 8, CRI 2 | 1 | 3 | L1-SINR=30dB |
| 3 | CRI 21, CRI 8, CRI 11 | 2, 3, and 4 | 1 | L1-SINR=28dB |
| 4 | CRI 4, CRI 8 | 1 and 4 | / | L1-RSRP=-68dBm |

Example 3. The network side configures one reporting setting for a UE and associates it with a CSI resource setting. The CSI resource setting includes K measurement resource groups, where K > 2. The network side configures the UE to perform group-based measurement reporting for L1-SINR.

Assume the UE reports N beam groups, each including M beam pairs, where M is less than or equal to K. That is, the UE selects M resources from K measurement resource groups as a reporting group. These M resources may be received simultaneously by the UE, for example, using one receiving filter or multiple receiving filters. This is not limited in the embodiments of the present application.

Similar to examples 1 and 2, while reporting resources/beams/measurement values, the UE needs to report, for each group of resources/beams/measurement values, the corresponding measurement resource group, a measurement resource group for channel measurements or a measurement resource group for interference measurements. Alternatively, the UE needs to report, for all reported groups, a measurement resource group jointly reported for all reporting groups, a measurement resource group for channel measurement, or a measurement resource group for interference measurement. The reporting methods for this example may be found in examples 1 and 2, and will not be repeated here.

For group-based measurement reporting for L1-SINR, each reporting group may include only one measurement value, representing the measurement value calculated using all measurement resources, channel measurement resource groups, and interference measurement resource groups within the reporting group. For example, the UE reporting is shown in Table 3, in which group 1 includes three measurement resource index indicators but only one measurement value. This measurement value is the L1-SINR value calculated using CRI 1 from measurement resource group 1 and CRI 9 from measurement resource group 2 as the useful signal, and CRI 2 from measurement resource group 5 as the interference signal.

Table 5

| Report Index | Resource Index | Channel Measurement Resource Group | Interference Measurement Resource Group | Measurement Value |
|---|---|---|---|---|
| Group 1 | CRI 1, CRI 9, CRI 2 | 1 and 2 | 3 | L1-SINR=35dB |
| Group 2 | CRI 8, CRI 2 | 1 | 3 | L1-SINR=30dB |
| Group 3 | CRI 21, CRI 8, CRI 11 | 2, 3 and 4 | 1 | L1-SINR=28dB |
| Group 4 | CRI 4, CRI 8 | 1 | 4 | L1-SINR=25dBm |

In addition, Table 6 may also be used for reporting:

Table 6

| Report Index | Resource Index | L1-SINR Measurement Value |
|---|---|---|
| Group 1 | CRI 1, CRI 9, CRI 2 | 35dB, 15dB, -10dB |
| Group 2 | CRI 8, CRI 2 | 30dB, 15dB |
| Group 3 | CRI 21, CRI 8, CRI 11 | 28dB, -12dB, 10dB |
| Group 4 | CRI 4, CRI 8 | 25dB, -8dB |

The number of measurement values is equal to the number of resource indexes. The nth measurement value in each group represents the measurement value calculated using the resource corresponding to the nth resource index as a channel measurement and the resources corresponding to other resource indexes as interference measurements. This reflects the mutual interference between multiple measurement resource groups or multiple TRPs.

In this case, since each measurement resource group is used for channel measurement or interference measurement in turn, there is no need to additionally indicate the purpose of each measurement resource group.

In some embodiments, the UE may determine the dynamic cooperation set (a set of multiple cooperation points), or at least the UE may initiate dynamic changes to the cooperation set. For example, the UE determines the association between measurement resources (groups) and cooperation points through network-side configuration. While the UE performs cooperative transmission, it measures some measurement resources (which may be measurement resources (groups) corresponding to cooperation points performing cooperative transmission, or resources corresponding to cooperation points outside the cooperation set, i.e., non-cooperation points). If the link quality between a cooperation point and the UE deteriorates, or if other non-cooperation points have better link quality, the UE may initiate a cooperation set change report, allowing the network to dynamically change the cooperation set. This will significantly reduce the cooperation set change latency.

For example, based on the network-side configuration, the UE may determine the correspondence between currently transmitted data and cooperation points. The correspondence may be that the PDSCH beam indication (such as TCI state) corresponds to different values of the first parameter, respectively. For instance, the first TCI state corresponds to the first value of the first parameter, the second TCI state corresponds to the third value of the first parameter, and different measurement resources or measurement resource groups correspond to the second and third values of the first parameter, respectively. If the measurement value of the measurement resource or measurement resource group corresponding to the second value is high, the UE may initiate a request to change the TCI state, requesting that the TCI state be changed to the reference signal corresponding to the second value of the first parameter (or the TCI state corresponding to the reference signal). Similarly, if the measurement value of the measurement resource or measurement resource group corresponding to the third value is low, the UE may initiate a request to change the TCI state, requesting that the TCI state corresponding to the third value be changed to the reference signal corresponding to the second value of the first parameter (or the TCI state corresponding to the reference signal).

The embodiments of the present application provide a measurement reporting method. In the method, a first measurement resource group set is configured on network side, and the terminal selects a second measurement resource group set from the first measurement resource group set, and reports measurement values and indication information to the network side. The indication information is used for determining correspondences between the measurement values and measurement resource groups and/or determining measurement resource groups corresponding to the measurement values. The measurement reporting method enables the terminal to report beam information of multiple TRP joint transmissions in one report, where a number of reported measurement resource groups is determined by the terminal. The measurement reporting method is more suitable for terminal-centric transmission systems, effectively improving measurement efficiency and reducing measurement delay. In an embodiment, the method also supports L1-SINR measurement reporting between beam pairs of multiple TRPs, which may effectively reflect the interference between beams of multiple TRPs.

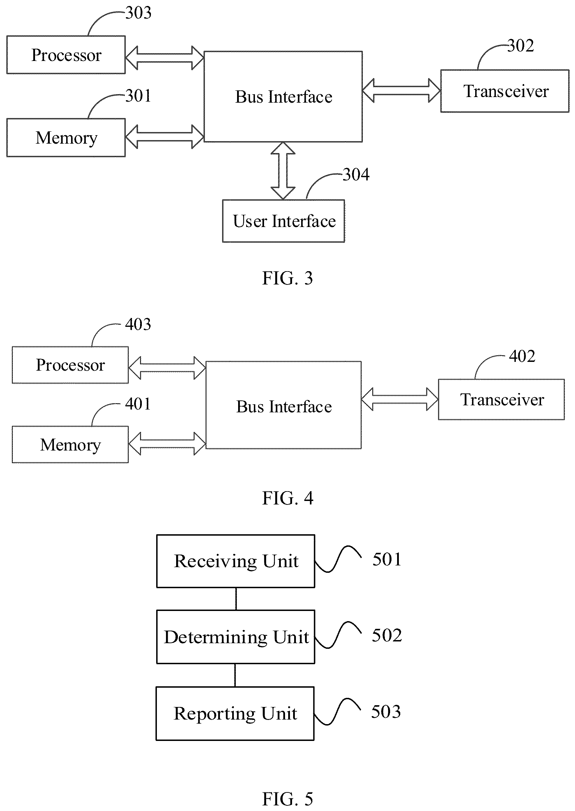

FIG. 3 is a schematic diagram of a structure of a terminal provided by an embodiment of the present application. As shown in FIG. 3, the terminal includes a memory 301, a transceiver 302 and a processor 303.

The memory 301 is used for storing a computer program; the transceiver 302 is used for receiving and transmitting data under control of the processor 303.

In an embodiment, the transceiver 302 is used to receive and transmit data under the control of the processor 303.

In FIG. 3, a bus architecture may include any number of interconnected buses and bridges, which are linked together through various circuits of one or more processors represented by processor 303 and one or more memories represented by the memory 301. The bus architecture may also link together various other circuits, such as peripherals, voltage regulators, and power management circuits. These are well known in the art and therefore will not be described further in the present application. The bus interface provides an interface. The transceiver 302 may be multiple elements, i.e., including a transmitter and a receiver, units for providing communication with various other devices over transmission media including wireless channels, wired channels, fiber optic cables, and the like. For different user equipment, the user interface 304 may also be an interface capable of externally or internally connecting the required equipment, and the connected equipment includes, but not limited to, a keypad, a display, a speaker, a microphone, a joystick, and the like.

The processor 303 is responsible for managing the bus architecture and general processing, and the memory 301 may store data used by the processor 303 when performing operations.

In an embodiment, the processor 303 may be a central processing unit (CPU), an application specific integrated circuit (ASIC), a field programmable gate array (FPGA), or a complex programmable logic device (CPLD), and the processor may also adopt a multi-core architecture.

The processor is configured to execute any of the methods provided by the embodiments of the present application according to the obtained executable instructions by calling the computer program stored in the memory. The processor and memory may also be physically separated.

The processor 303 is used for reading the computer program in the memory 301 and performing following operations:

receiving configuration information transmitted by a network device, where the configuration information includes a first measurement resource group set;

determining, based on the configuration information, a second measurement resource group set from the first measurement resource group set; and

reporting, based on the second measurement resource group set, a measurement value and indication information to the network device;

where the indication information is used to determine a correspondence between a measurement resource group in the second measurement resource group set and a measurement value, and/or the indication information is used to determine a measurement resource group corresponding to the measurement value.

In some embodiments, the correspondence is determined based on the indication information, or the correspondence is determined based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, reporting the indication information to the network device includes:
in a case where the indication information indicates the second measurement resource group set or the indication information indicates the third measurement resource group set, the indication information is reported by T1 bits, where T1 is a positive integer.

In some embodiments, in a case where the indication information is used to indicate the measurement resource group corresponding to the maximum measurement value and the second measurement resource group set, reporting the indication information to the network device includes:
indicating the measurement resource group corresponding to the maximum measurement value using T2 bits and indicating other measurement resource groups in the second measurement resource group set except for the measurement resource group corresponding to the maximum measurement value using T3 bits, where T2 and T3 are positive integers; or
indicating the second measurement resource group set using T4 bits and indicating the measurement resource group corresponding to the maximum measurement value in the second measurement resource group set using T5 bits, where T4 and T5 are positive integers.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In some embodiments, in a case where the correspondence is determined based on the indication information, the indication information is used to indicate the correspondence.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, reporting the measurement value to the network device including: reporting layer 1 reference signal received power, L1-RSRP and/or a layer 1 signal to interference plus noise ratio, L1-SINR to the network device.

In some embodiments, reporting the L1-RSRP and/or the L1-SINR to the network device includes:

in a case where a measurement resource group set used for interference measurement is an empty set or the indication information only indicates a measurement resource group set used for channel measurement, reporting the L1-RSRP to the network device;

in a case where a measurement resource group set used for interference measurement is a non-empty set or the indication information indicates a measurement resource group set used for interference measurement, reporting the L1-SINR to the network device; or

in a case where a measurement resource group set used for interference measurement is a non-empty set or the indication information indicates a measurement resource group set used for interference measurement, reporting the L1-RSRP and the L1-SINR to the network device.

In some embodiments, reporting the L1-RSRP and the L1-SINR to the network device includes:

reporting the L1-RSRP and the L1-SINR to the network device in a non-differential reporting manner; or

reporting the L1-RSRP and the L1-SINR to the network device in a differential reporting manner, where a differential is respectively performed between L1-RSRP, and between L1-SINRs.

In some embodiments, in a case where the measurement value includes the L1-SINR, reporting the measurement value to the network device includes:

determining the L1-SINR based on at least two of an indicated measurement resource group, a measurement resource group used for channel measurement, or a measurement resource group used for interference measurement, and reporting the L1-SINR to the network device;

in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,

in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

In some embodiments, determining the second measurement resource group set from the first measurement resource group set including: determining the second measurement resource group set from the first measurement resource group set based on network side configuration or a predefined rule.

In some embodiments, in a case where the terminal performs group-based measurement reporting, determining the second measurement resource group from the first measurement resource group includes: determining, from the first measurement resource group set, a second measurement resource group set corresponding to a reporting group selected by the terminal, where different reporting groups correspond to same or different second measurement resource group sets; or determining, from the first measurement resource group set, second measurement resource group sets corresponding to all reporting groups selected by the terminal.

In some embodiments, the first measurement resource group set includes K measurement resource groups, and K is an integer greater than 2.

It should be noted here that the terminal provided in the embodiments of the present application may implement all the method steps implemented by the method embodiments in which the execution subject is a terminal, and may achieve the same effects. The same parts and beneficial effects in the embodiments as those in the method embodiments are not described in detail.

FIG. 4 is a schematic diagram of a structure of a network device provided by an embodiment of the present application. As shown in FIG. 4, the network device includes a memory 401, a transceiver 402 and a processor 403.

The memory 401 is used for storing a computer program; the transceiver 402 is used for receiving and transmitting data under control of the processor 403.

In an embodiment, the transceiver 402 is used to receive and transmit data under the control of the processor 403.

In FIG. 4, a bus architecture may include any number of interconnected buses and bridges, which are linked together through various circuits of one or more processors represented by processor 403 and one or more memories represented by the memory 401. The bus architecture may also link together various other circuits, such as peripherals, voltage regulators, and power management circuits. These are well known in the art and therefore will not be described further in the present application. The bus interface provides an interface.

The transceiver 402 may be multiple elements, i.e., including a transmitter and a receiver, units for providing communication with various other devices over transmission media including wireless channels, wired channels, fiber optic cables, and the like. The processor 403 is responsible for managing the bus architecture and general processing, and the memory 401 may store data used by the processor 403 when performing operations.

The processor 403 may be a central processing unit (CPU), an application specific integrated circuit (ASIC), a field programmable gate array (FPGA), or a complex programmable logic device (CPLD), and the processor may also adopt a multi-core architecture.

The processor 403 is used for reading the computer program in the memory 401 and performing following operations:

transmitting configuration information to the terminal, the configuration information including a first measurement resource group set;

receiving a measurement value and indication information reported by the terminal;

determining, based on the indication information, a correspondence between a measurement resource group in a second measurement resource group set and a measurement value; and/or,

determining, based on the indication information, a measurement resource group corresponding to the measurement value;

where the second measurement resource group set is selected from the first measurement resource group set.

In some embodiments, determining, based on the indication information, a correspondence between a measurement resource group in a second measurement resource group set and the measurement value, includes:

determining the correspondence based on the indication information; or

determining the correspondence based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, receiving the measurement value reported by the terminal includes:
receiving layer 1 reference signal received power, L1-RSRP and/or a layer 1 signal to interference plus noise ratio, L1-SINR reported by the terminal.

In some embodiments, in a case where the measurement value includes the L1-SINR, receiving the measurement value reported by the terminal includes:

receiving an L1-SINR corresponding to a reporting group reported by the terminal, where the L1-SINR corresponding to the reporting group is determined based on at least two of a measurement resource group corresponding to the reporting group, a measurement resource group used for channel measurement, or a measurement resource group used for interference measurement;

receiving multiple L1-SINRs corresponding to a reporting group reported by the terminal, where the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or

receiving multiple L1-SINRs corresponding to a reporting group reported by the terminal, where the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

It should be noted here that the network device provided in the embodiments of the present application may implement all the method steps implemented by the method embodiments in which the execution subject is a network device, and may achieve the same effects. The same parts and beneficial effects in the embodiments as those in the method embodiments are not described in detail.

FIG. 5 is a first schematic diagram of a structure of a measurement reporting apparatus according to an embodiment of the present application. As shown in FIG. 5, the apparatus includes:

a receiving unit 501, used for receiving configuration information transmitted by a network device, where the configuration information includes a first measurement resource group set;

a determining unit 502, used for determining, based on the configuration information, a second measurement resource group set from the first measurement resource group set; and

a reporting unit 503, used for reporting, based on the second measurement resource group set, a measurement value and indication information to the network device;

where the indication information is used to determine a correspondence between a measurement resource group in the second measurement resource group set and the measurement value, and/or the indication information is used to determine a measurement resource group corresponding to the measurement value.

In some embodiments, the correspondence is determined based on the indication information, or the correspondence is determined based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, the reporting unit 503 is used for:
in a case where the indication information indicates the second measurement resource group set or the indication information indicates the third measurement resource group set, the indication information is reported by T1 bits, where T1 is a positive integer.

In some embodiments, in a case where the indication information is used to indicate the measurement resource group corresponding to the maximum measurement value and the second measurement resource group set, the reporting unit 503 is used for:

indicating the measurement resource group corresponding to the maximum measurement value using T2 bits and indicating other measurement resource groups in the second measurement resource group set except for the measurement resource group corresponding to the maximum measurement value using T3 bits, where T2 and T3 are positive integers; or

indicating the second measurement resource group set using T4 bits and indicating the measurement resource group corresponding to the maximum measurement value in the second measurement resource group set using T5 bits, where T4 and T5 are positive integers.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In some embodiments, in a case where the correspondence is determined based on the indication information, the indication information is used to indicate the correspondence.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, the reporting unit 503 is used for: reporting layer 1 reference signal received power, L1-RSRP and/or a layer 1 signal to interference plus noise ratio, L1-SINR to the network device.
In some embodiments, the reporting unit 503 is used for:

in a case where a measurement resource group set used for interference measurement is an empty set or the indication information only indicates a measurement resource group set used for channel measurement, reporting the L1-RSRP to the network device;

in a case where a measurement resource group set used for interference measurement is a non-empty set or the indication information indicates a measurement resource group set used for interference measurement, reporting the L1-SINR to the network device; or

in a case where a measurement resource group set used for interference measurement is a non-empty set or the indication information indicates a measurement resource group set used for interference measurement, reporting the L1-RSRP and the L1-SINR to the network device.

In some embodiments, the reporting unit 503 is used for:

reporting the L1-RSRP and the L1-SINR to the network device in a non-differential reporting manner; or

reporting the L1-RSRP and the L1-SINR to the network device in a differential reporting manner, where a differential is respectively performed between L1-RSRP, and between L1-SINRs.

In some embodiments, in a case where the measurement value includes the L1-SINR, the reporting unit 503 is used for:

determining the L1-SINR based on at least two of an indicated measurement resource group, a measurement resource group used for channel measurement, or a measurement resource group used for interference measurement, and reporting the L1-SINR to the network device;

in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,

in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

In some embodiments, the determining unit 502 is used for determining the second measurement resource group set from the first measurement resource group set based on network side configuration or a predefined rule.

In some embodiments, in a case where the terminal performs group-based measurement reporting, the determining unit 502 is used for:
determining, from the first measurement resource group set, a second measurement resource group set corresponding to a reporting group selected by the terminal, where different reporting groups correspond to same or different second measurement resource group sets; or determining, from the first measurement resource group set, second measurement resource group sets corresponding to all reporting groups selected by the terminal.

In some embodiments, the first measurement resource group set includes K measurement resource groups, and K is an integer greater than 2.

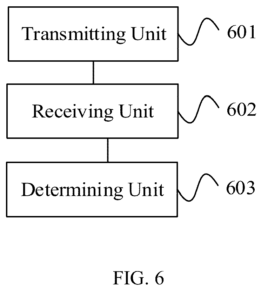

FIG. 6 is a second schematic diagram of a structure of a measurement reporting apparatus according to an embodiment of the present application. As shown in FIG. 6, the apparatus including:

a transmitting unit 601, used for transmitting configuration information to a terminal, where the configuration information includes a first measurement resource group set;

a receiving unit 602, used for receiving a measurement value and indication information reported by the terminal;

a determining unit 603, used for determining, based on the indication information, a correspondence between a measurement resource group in a second measurement resource group set and the measurement value, and/or determining, based on the indication information, a measurement resource group corresponding to the measurement value.

where the second measurement resource group set is selected from the first measurement resource group set.

In some embodiments, the determining unit 603 is used for:

determining the correspondence based on the indication information; or

determining the correspondence based on the indication information and a predefined rule.

In some embodiments, the indication information is used to indicate one or more of:

the second measurement resource group set;

a third measurement resource group set, the third measurement resource group set including other measurement resource groups in the first measurement resource group set except for the second measurement resource group set; or

a measurement resource group corresponding to a maximum measurement value.

In some embodiments, the second measurement resource group set includes a measurement resource group set for channel measurement and a measurement resource group set for interference measurement, and the indication information is used to indicate at least two of:

the second measurement resource group set;

the measurement resource group set for channel measurement; or

the measurement resource group set for interference measurement.

In some embodiments, the correspondence includes:

a measurement value corresponds to a measurement resource group in a second measurement resource group set, where different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

In some embodiments, the receiving unit 602 is used for:
receiving layer 1 reference signal received power, L1-RSRP and/or a layer 1 signal to interference plus noise ratio, L1-SINR reported by the terminal.
In some embodiments, in a case where the measurement value includes the L1-SINR, the receiving unit 602 is used for:

receiving an L1-SINR corresponding to a reporting group reported by the terminal, where the L1-SINR corresponding to the reporting group is determined based on at least two of a measurement resource group corresponding to the reporting group, a measurement resource group used for channel measurement, or a measurement resource group used for interference measurement;

receiving multiple L1-SINRs corresponding to a reporting group reported by the terminal, where the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or

receiving multiple L1-SINRs corresponding to a reporting group reported by the terminal, where the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

The methods and apparatus provided in the various embodiments of the present application are based on the same application concept. Since the methods and apparatus solve problems based on similar principles, the implementation of the apparatus and methods may refer to each other, and the repeated parts will not be repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as U disk, mobile hard disk, read-only memory (ROM), random access memory (RAM), magnetic disk, or optical disk.

It should be noted here that the above apparatus provided in the embodiments of the present application may implement all the method steps implemented by the above method embodiments, and may achieve the same effects. The same parts and beneficial effects in the embodiments as those in the method embodiments are not described in detail.

On the other hand, an embodiment of the present application further provides a non-transitory readable storage medium storing a computer program, and the computer program is used for causing a processor to perform the measurement reporting method provided in each of the above embodiments, including:

receiving configuration information transmitted by a network device, where the configuration information includes a first measurement resource group set; determining, based on the configuration information, a second measurement resource group set from the first measurement resource group set; and reporting, based on the second measurement resource group set, a measurement value and indication information to the network device; where the indication information is used to determine a correspondence between a measurement resource group in the second measurement resource group set and the measurement value, and/or the indication information is used to determine a measurement resource group corresponding to the measurement value; or,

transmitting configuration information to a terminal, where the configuration information includes a first measurement resource group set; receiving a measurement value and indication information reported by the terminal; determining, based on the indication information, a correspondence between a measurement resource group in a second measurement resource group set and a measurement value; and/or, determining, based on the indication information, a measurement resource group corresponding to the measurement value; where the second measurement resource group set is selected from the first measurement resource group set.

It should be noted that the non-transitory readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a generalpurpose computer, a special purpose computer, an embedded processing machine or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A measurement reporting method, comprising:

    receiving configuration information transmitted by a network device, wherein the configuration information comprises a first measurement resource group set;
    determining, based on the configuration information, a second measurement resource group set from the first measurement resource group set; and
    reporting, based on the second measurement resource group set, a measurement value and indication information to the network device;
    wherein the indication information is used to determine a correspondence between a measurement resource group in the second measurement resource group set and the measurement value, and/or the indication information is used to determine a measurement resource group corresponding to the measurement value.

2. The method of claim 1, wherein
    the correspondence is determined based on the indication information, or the correspondence is determined based on the indication information and a predefined rule.

3. The method of claim 1 or 2, wherein the indication information is used to indicate one or more of:

    the second measurement resource group set;
    a third measurement resource group set, wherein the third measurement resource group set comprises other measurement resource groups in the first measurement resource group set except for the second measurement resource group set; or
    a measurement resource group corresponding to a maximum measurement value.

4. The method of claim 3, wherein reporting the indication information to the network device comprises:
    in a case where the indication information indicates the second measurement resource group set or the indication information indicates the third measurement resource group set, the indication information is reported by T1 bits, wherein T1 is a positive integer.

5. The method of claim 3, wherein in a case where the indication information is used to indicate the measurement resource group corresponding to the maximum measurement value and the second measurement resource group set, reporting the indication information to the network device comprises:

    indicating the measurement resource group corresponding to the maximum measurement value using T2 bits and indicating other measurement resource groups in the second measurement resource group set except for the measurement resource group corresponding to the maximum measurement value using T3 bits, wherein T2 and T3 are positive integers; or
    indicating the second measurement resource group set using T4 bits and indicating the measurement resource group corresponding to the maximum measurement value in the second measurement resource group set using T5 bits, wherein T4 and T5 are positive integers.

6. The method of claim 1 or 2, wherein the second measurement resource group set comprises a measurement resource group set used for channel measurement and a measurement resource group set used for interference measurement, and the indication information is used to indicate at least two of:

the second measurement resource group set;
the measurement resource group set used for channel measurement; or
the measurement resource group set used for interference measurement.

7. The method of claim 2, wherein in a case where the correspondence is determined based on the indication information, the indication information is used to indicate the correspondence.

8. The method of any of claims 1 to 7, wherein the correspondence comprises:

a measurement value corresponds to a measurement resource group in a second measurement resource group set, wherein different measurement values correspond to same or different second measurement resource group sets, and different measurement values correspond to same or different measurement resource groups;
a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or
a reporting group set corresponds to a second measurement resource group set, a reporting group in the reporting group set corresponds to a measurement resource group in the second measurement resource group set, and different reporting groups correspond to same or different measurement resource groups.

9. The method of claim 1, wherein reporting the measurement value to the network device comprises:
reporting layer 1 reference signal received power, L1-RSRP and/or a layer 1 signal to interference plus noise ratio, L1-SINR, to the network device.

10. The method of claim 9, wherein reporting the L1-RSRP and/or the L1-SINR to the network device comprises:

in a case where a measurement resource group set used for interference measurement is an empty set or the indication information only indicates a measurement resource group set used for channel measurement, reporting the L1-RSRP to the network device;
in a case where a measurement resource group set used for interference measurement is a non-empty set or the indication information indicates a measurement resource group set used for interference measurement, reporting the L1-SINR to the network device; or
in a case where a measurement resource group set used for interference measurement is a non-empty set or the indication information indicates a measurement resource group set used for interference measurement, reporting the L1-RSRP and the L1-SINR to the network device.

11. The method of claim 9 or 10, wherein reporting the L1-RSRP and the L1-SINR to the network device comprises:

reporting the L1-RSRP and the L1-SINR to the network device in a non-differential reporting manner; or
reporting the L1-RSRP and the L1-SINR to the network device in a differential reporting manner, wherein a differential is respectively performed between L1-RSRP, and between L1-SINRs.

12. The method of claim 9, wherein in a case where the measurement value comprises the L1-SINR, reporting the measurement value to the network device comprises:

determining the L1-SINR based on at least two of an indicated measurement resource group, a measurement resource group used for channel measurement, or a measurement resource group used for interference measurement, and reporting the L1-SINR to the network device;
in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,

in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

13. The method of claim 1, wherein determining the second measurement resource group set from the first measurement resource group set comprises:
determining the second measurement resource group set from the first measurement resource group set based on network-side configuration or a predefined rule.

14. The method of claim 13, wherein in a case where a terminal performs group-based measurement reporting, determining the second measurement resource group from the first measurement resource group comprises:

determining, from the first measurement resource group set, a second measurement resource group set corresponding to a reporting group selected by a terminal side, wherein different reporting groups correspond to same or different second measurement resource group sets; or

determining, from the first measurement resource group set, second measurement resource group sets corresponding to all reporting groups selected by the terminal side.

15. The method of claim 1, wherein the first measurement resource group set comprises K measurement resource groups, and K is an integer greater than 2.

16. A measurement reporting method, comprising:

transmitting configuration information to a terminal, wherein the configuration information comprises a first measurement resource group set;

receiving a measurement value and indication information reported by the terminal;

determining, based on the indication information, a correspondence between a measurement resource group in a second measurement resource group set and a measurement value; and/or,

determining, based on the indication information, a measurement resource group corresponding to the measurement value;

wherein the second measurement resource group set is selected from the first measurement resource group set.

17. The method of claim 16, wherein determining, based on the indication information, the correspondence between the measurement resource group in the second measurement resource group set and the measurement value, comprises:

determining the correspondence based on the indication information; or
determining the correspondence based on the indication information and a predefined rule.

18. The method of claim 16 or 17, wherein the indication information is used to indicate one or more of:

the second measurement resource group set;

a third measurement resource group set, wherein the third measurement resource group set comprises other measurement resource groups in the first measurement resource group set except for the second measurement resource group set; or

a measurement resource group corresponding to a maximum measurement value.

19. The method of claim 16 or 17, wherein the second measurement resource group set comprises a measurement resource group set used for channel measurement and a measurement resource group set used for interference measurement, and the indication information is used to indicate at least two of:

the second measurement resource group set;
the measurement resource group set used for channel measurement; or
the measurement resource group set used for interference measurement.

20. The method of claim 16 or 17, wherein the correspondence comprises:

a measurement value corresponds to a measurement resource group in a second measurement resource group set, wherein different measurement values correspond to same or different second measurement resource group sets, and different measurement values correspond to same or different measurement resource groups;
a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or
a reporting group set corresponds to a second measurement resource group set, a reporting group in the reporting group set corresponds to a measurement resource group in the second measurement resource group set, and different reporting groups correspond to same or different measurement resource groups.

21. The method of claim 16, wherein receiving the measurement value reported by the terminal comprises:
receiving layer 1 reference signal received power, L1-RSRP and/or a layer 1 signal to interference plus noise ratio, L1-SINR, reported by the terminal.

22. The method of claim 21, wherein in a case where the measurement value comprises the L1-SINR, receiving the measurement value reported by the terminal comprises:

receiving an L1-SINR corresponding to a reporting group reported by the terminal, wherein the L1-SINR corresponding to the reporting group is determined based on at least two of a measurement resource group corresponding to the reporting group, a measurement resource group used for channel measurement, or a measurement resource group used for interference measurement;
receiving multiple L1-SINRs corresponding to a reporting group reported by the terminal, wherein the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or
receiving multiple L1-SINRs corresponding to a reporting group reported by the terminal, wherein the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

23. A terminal, comprising a memory, a transceiver and a processor,
wherein the memory is used for storing a computer program; the transceiver is used for receiving and transmitting data under control of the processor; and the processor is used for reading the computer program in the memory and performing following operations:

receiving configuration information transmitted by a network device, wherein the configuration information comprises a first measurement resource group set;
determining, based on the configuration information, a second measurement resource group set from the first measurement resource group set; and
reporting, based on the second measurement resource group set, a measurement value and indication information to the network device;
wherein the indication information is used to determine a correspondence between a measurement resource group in the second measurement resource group set and the measurement value, and/or the indication information is used to determine a measurement resource group corresponding to the measurement value.

24. The terminal of claim 23, wherein the correspondence is determined based on the indication information, or the correspondence is determined based on the indication information and a predefined rule.

25. The terminal of claim 23 or 24, wherein the indication information is used to indicate one or more of:

the second measurement resource group set;
a third measurement resource group set, wherein the third measurement resource group set comprises other measurement resource groups in the first measurement resource group set except for the second measurement resource group set; or

a measurement resource group corresponding to a maximum measurement value.

26. The terminal of claim 23, wherein reporting the indication information to the network device comprises:
in a case where the indication information indicates the second measurement resource group set or the indication information indicates the third measurement resource group set, the indication information is reported by T1 bits, wherein T1 is a positive integer.

27. The terminal of claim 25, wherein in a case where the indication information is used to indicate the measurement resource group corresponding to the maximum measurement value and the second measurement resource group set, reporting the indication information to the network device comprises:
indicating the measurement resource group corresponding to the maximum measurement value using T2 bits and indicating other measurement resource groups in the second measurement resource group set except for the measurement resource group corresponding to the maximum measurement value using T3 bits, wherein T2 and T3 are positive integers; or
indicating the second measurement resource group set using T4 bits and indicating the measurement resource group corresponding to the maximum measurement value in the second measurement resource group set using T5 bits, wherein T4 and T5 are positive integers.

28. The terminal of claim 23 or 24, wherein the second measurement resource group set comprises a measurement resource group set used for channel measurement and a measurement resource group set used for interference measurement, and the indication information is used to indicate at least two of:

the second measurement resource group set;
the measurement resource group set used for channel measurement; or
the measurement resource group set used for interference measurement.

29. The terminal of claim 24, wherein in a case where the correspondence is determined based on the indication information, the indication information is used to indicate the correspondence.

30. The terminal of any of claims 23 to 29, wherein the correspondence comprises:

a measurement value corresponds to a measurement resource group in a second measurement resource group set, wherein different measurement values correspond to same or different second measurement resource group sets, and different measurement values correspond to same or different measurement resource groups;
a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or
a reporting group set corresponds to a second measurement resource group set, a reporting group in the reporting group set corresponds to a measurement resource group in the second measurement resource group set, and different reporting groups correspond to same or different measurement resource groups.

31. The terminal of claim 23, wherein reporting the measurement value to the network device comprises:
reporting layer 1 reference signal received power, L1-RSRP and/or a layer 1 signal to interference plus noise ratio, L1-SINR, to the network device.

32. The terminal of claim 31, wherein reporting the L1-RSRP and/or the L1-SINR to the network device comprises:

in a case where a measurement resource group set used for interference measurement is an empty set or the indication information only indicates a measurement resource group set used for channel measurement, reporting the L1-RSRP to the network device;
in a case where a measurement resource group set used for interference measurement is a non-empty set or the indication information indicates a measurement resource group set used for interference measurement, reporting the L1-SINR to the network device; or
in a case where a measurement resource group set used for interference measurement is a non-empty set or the indication information indicates a measurement resource group set used for interference measurement, reporting the L1-RSRP and the L1-SINR to the network device.

33. The terminal of claim 31 or 32, wherein reporting the L1-RSRP and the L1-SINR to the network device comprises:

   reporting the L1-RSRP and the L1-SINR to the network device in a non-differential reporting manner; or reporting the L1-RSRP and the L1-SINR to the network device in a differential reporting manner, wherein a differential is respectively performed between L1-RSRP, and between L1-SINRs.

34. The terminal of claim 31, wherein in a case where the measurement value comprises the L1-SINR, reporting the measurement value to the network device comprises:

   determining the L1-SINR based on at least two of an indicated measurement resource group, a measurement resource group used for channel measurement, and a measurement resource group used for interference measurement, and reporting the L1-SINR to the network device;
   in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,
   in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

35. The terminal of claim 23, wherein determining the second measurement resource group set from the first measurement resource group set comprises:
   determining the second measurement resource group set from the first measurement resource group set based on network-side configuration or a predefined rule.

36. The terminal of claim 35, wherein in a case where the terminal performs group-based measurement reporting, determining the second measurement resource group from the first measurement resource group comprises:

   determining, from the first measurement resource group set, a second measurement resource group set corresponding to a reporting group selected by a terminal side, wherein different reporting groups correspond to same or different second measurement resource group sets; or
   determining, from the first measurement resource group set, second measurement resource group sets corresponding to all reporting groups selected by the terminal side.

37. The terminal of claim 23, wherein the first measurement resource group set comprises K measurement resource groups, and K is an integer greater than 2.

38. A network device, comprising a memory, a transceiver and a processor,
   wherein the memory is used for storing a computer program; the transceiver is used for receiving and transmitting data under control of the processor; and the processor is used for reading the computer program in the memory and performing following operations:

   transmitting configuration information to a terminal, wherein the configuration information comprises a first measurement resource group set;
   receiving a measurement value and indication information reported by the terminal;
   determining, based on the indication information, a correspondence between a measurement resource group in a second measurement resource group set and a measurement value; and/or,
   determining, based on the indication information, a measurement resource group corresponding to the measurement value;
   wherein the second measurement resource group set is selected from the first measurement resource group set.

39. The network device of claim 38, wherein determining, based on the indication information, the correspondence between the measurement resource group in the second measurement resource group set and the measurement value, comprises:

> determining the correspondence based on the indication information; or
> determining the correspondence based on the indication information and a predefined rule.

**40.** The network device of claim 38 or 39, wherein the indication information is used to indicate one or more of:

> the second measurement resource group set;
> a third measurement resource group set, wherein the third measurement resource group set comprises other measurement resource groups in the first measurement resource group set except for the second measurement resource group set; or
> a measurement resource group corresponding to a maximum measurement value.

**41.** The network device of claim 38 or 39, wherein the second measurement resource group set comprises a measurement resource group set used for channel measurement and a measurement resource group set used for interference measurement, and the indication information is used to indicate at least two of:

> the second measurement resource group set;
> the measurement resource group set used for channel measurement; or
> the measurement resource group set used for interference measurement.

**42.** The network device of claim 38 or 39, wherein the correspondence comprises:

> a measurement value corresponds to a measurement resource group in a second measurement resource group set, wherein different measurement values correspond to same or different second measurement resource group sets, and different measurement values correspond to same or different measurement resource groups;
> a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or
> a reporting group set corresponds to a second measurement resource group set, a reporting group in the reporting group set corresponds to a measurement resource group in the second measurement resource group set, and different reporting groups correspond to same or different measurement resource groups.

**43.** The network device of claim 38, wherein receiving the measurement value reported by the terminal comprises:
receiving layer 1 reference signal received power, L1-RSRP and/or a layer 1 signal to interference plus noise ratio, L1-SINR, reported by the terminal.

**44.** The network device of claim 43, wherein in a case where the measurement value comprises the L1-SINR, receiving the measurement value reported by the terminal comprises:

> receiving an L1-SINR corresponding to a reporting group reported by the terminal, wherein the L1-SINR corresponding to the reporting group is determined based on at least two of a measurement resource group corresponding to the reporting group, a measurement resource group used for channel measurement, or a measurement resource group used for interference measurement;
> receiving multiple L1-SINRs corresponding to a reporting group reported by the terminal, wherein the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or
> receiving multiple L1-SINRs corresponding to a reporting group reported by the terminal, wherein the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

**45.** A measurement reporting apparatus, the apparatus comprising:

a receiving unit, used for receiving configuration information transmitted by a network device, wherein the configuration information comprises a first measurement resource group set;

a determining unit, used for determining, based on the configuration information, a second measurement resource group set from the first measurement resource group set; and

a reporting unit, used for reporting, based on the second measurement resource group set, a measurement value and indication information to the network device;

wherein the indication information is used to determine a correspondence between a measurement resource group in the second measurement resource group set and the measurement value, and/or the indication information is used to determine a measurement resource group corresponding to the measurement value.

46. The apparatus of claim 45, wherein the correspondence is determined based on the indication information, or the correspondence is determined based on the indication information and a predefined rule.

47. The apparatus of claim 45 or 46, wherein the indication information is used to indicate one or more of:

the second measurement resource group set;

a third measurement resource group set, wherein the third measurement resource group set comprises other measurement resource groups in the first measurement resource group set except for the second measurement resource group set; or

a measurement resource group corresponding to a maximum measurement value.

48. The apparatus of claim 47, wherein the reporting unit is used for:
in a case where the indication information indicates the second measurement resource group set or the indication information indicates the third measurement resource group set, the indication information is reported by T1 bits, wherein T1 is a positive integer.

49. The apparatus of claim 47, wherein in a case where the indication information is used to indicate the measurement resource group corresponding to the maximum measurement value and the second measurement resource group set, the reporting unit is used for:
indicating the measurement resource group corresponding to the maximum measurement value using T2 bits and indicating other measurement resource groups in the second measurement resource group set except for the measurement resource group corresponding to the maximum measurement value using T3 bits, wherein T2 and T3 are positive integers; or
indicating the second measurement resource group set using T4 bits and indicating the measurement resource group corresponding to the maximum measurement value in the second measurement resource group set using T5 bits, wherein T4 and T5 are positive integers.

50. The apparatus of claim 45, wherein the second measurement resource group set comprises a measurement resource group set used for channel measurement and a measurement resource group set used for interference measurement, and the indication information is used to indicate at least two of:

the second measurement resource group set;

the measurement resource group set used for channel measurement; or

the measurement resource group set used for interference measurement.

51. The apparatus of claim 46, wherein in a case where the correspondence is determined based on the indication information, the indication information is used to indicate the correspondence.

52. The apparatus of any of claims 45 to 51, wherein the correspondence comprises:

a measurement value corresponds to a measurement resource group in a second measurement resource group set, wherein different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

53. The apparatus of claim 45, wherein the reporting unit is used for:
reporting layer 1 reference signal received power, L1-RSRP and/or a layer 1 signal to interference plus noise ratio, L1-SINR, to the network device.

54. The apparatus of claim 53, wherein the reporting unit is used for:

in a case where a measurement resource group set used for interference measurement is an empty set or the indication information only indicates a measurement resource group set used for channel measurement, reporting the L1-RSRP to the network device;
in a case where a measurement resource group set used for interference measurement is a non-empty set or the indication information indicates a measurement resource group set used for interference measurement, reporting the L1-SINR to the network device; or
in a case where a measurement resource group set used for interference measurement is a non-empty set or the indication information indicates a measurement resource group set used for interference measurement, reporting the L1-RSRP and the L1-SINR to the network device.

55. The apparatus of claim 53 or 54, wherein the reporting unit is used for:

reporting the L1-RSRP and the L1-SINR to the network device in a non-differential reporting manner; or
reporting the L1-RSRP and the L1-SINR to the network device in a differential reporting manner, wherein a differential is respectively performed between L1-RSRP, and between L1-SINRs.

56. The apparatus of claim 53, wherein in a case where the measurement value comprises the L1-SINR, the reporting unit is used for:

determining the L1-SINR based on at least two of an indicated measurement resource group, a measurement resource group used for channel measurement, and a measurement resource group used for interference measurement, and reporting the L1-SINR to the network device;
in a case where a reporting group corresponds to a measurement resource group, determining an nth L1-SINR based on an nth measurement resource used for channel measurement and other measurement resources used for interference measurement except for the nth measurement resource in the measurement resource group; and reporting multiple L1-SINRs corresponding to the reporting group to the network device; or,
in a case where a reporting group corresponds to a second measurement resource group set, determining an mth L1-SINR based on an mth measurement resource group used for channel measurement and other measurement resource groups used for interference measurement except for the mth measurement resource group in the second measurement resource group set; and reporting multiple L1-SINRs corresponding to the reporting group to the network device.

57. The apparatus of claim 45, wherein the determining unit is used for:
determining the second measurement resource group set from the first measurement resource group set based on network-side configuration or a predefined rule.

58. The apparatus of claim 57, wherein in a case where a terminal performs group-based measurement reporting, the determining unit is used for:
determining, from the first measurement resource group set, a second measurement resource group set corresponding to a reporting group selected by a terminal side, wherein different reporting groups correspond to same or different second measurement resource group sets; or determining, from the first measurement resource group set, second measurement resource group sets corresponding to all reporting groups selected by the terminal side.

59. The apparatus of claim 45, wherein the first measurement resource group set comprises K measurement resource groups, and K is an integer greater than 2.

60. A measurement reporting apparatus, the apparatus comprising:

a transmitting unit, used for transmitting configuration information to a terminal, wherein the configuration information comprises a first measurement resource group set;

a receiving unit, used for receiving a measurement value and indication information reported by the terminal; and

a determining unit, used for determining, based on the indication information, a correspondence between a measurement resource group in a second measurement resource group set and the measurement value, and/or determining, based on the indication information, a measurement resource group corresponding to the measurement value;

wherein the second measurement resource group set is selected from the first measurement resource group set.

61. The apparatus of claim 60, wherein the determining unit is used for:

determining the correspondence based on the indication information; or
determining the correspondence based on the indication information and a predefined rule.

62. The apparatus of claim 60 or 61, wherein the indication information is used to indicate one or more of:

the second measurement resource group set;
a third measurement resource group set, wherein the third measurement resource group set comprises other measurement resource groups in the first measurement resource group set except for the second measurement resource group set; or
a measurement resource group corresponding to a maximum measurement value.

63. The apparatus of claim 60 or 61, wherein the second measurement resource group set comprises a measurement resource group set used for channel measurement and a measurement resource group set used for interference measurement, and the indication information is used to indicate at least two of:

the second measurement resource group set;
the measurement resource group set used for channel measurement; or
the measurement resource group set used for interference measurement.

64. The apparatus of claim 60 or 61, wherein the correspondence comprises:

a measurement value corresponds to a measurement resource group in a second measurement resource group set, wherein different measurement values correspond to same or different second measurement resource group sets, and different measurement values correspond to same or different measurement resource groups;

a reporting group corresponds to a second measurement resource group set, different reporting groups correspond to same or different second measurement resource group sets, different measurement values in a reporting group correspond to measurement resource groups in a second measurement resource group set, and different measurement values in a reporting group correspond to same or different measurement resource groups; or

a reporting group set corresponds to a second measurement resource group set, a reporting group in the reporting group set corresponds to a measurement resource group in the second measurement resource group set, and different reporting groups correspond to same or different measurement resource groups.

65. The apparatus of claim 60, wherein the receiving unit is used for:
receiving layer 1 reference signal received power, L1-RSRP and/or a layer 1 signal to interference plus noise ratio, L1-SINR, reported by the terminal.

66. The apparatus of claim 65, wherein in a case where the measurement value comprises the L1-SINR, the receiving unit is used for:

receiving an L1-SINR corresponding to a reporting group reported by the terminal, wherein the L1-SINR corresponding to the reporting group is determined based on at least two of a measurement resource group corresponding to the reporting group, a measurement resource group used for channel measurement, or a measurement resource group used for interference measurement;

receiving multiple L1-SINRs corresponding to a reporting group reported by the terminal, wherein the reporting group corresponds to a measurement resource group, and an nth L1-SINR among the multiple L1-SINRs is determined based on an nth measurement resource used for channel measurement and other measurement resources used for interference measurement except for the nth measurement resource in the measurement resource group; or

receiving multiple L1-SINRs corresponding to a reporting group reported by the terminal, wherein the reporting group corresponds to a second measurement resource group set, and an mth L1-SINR among the multiple L1-SINRs is determined based on an mth measurement resource group used for channel measurement and other measurement resource groups used for interference measurement except for the mth measurement resource group in the second measurement resource group set.

67. A non-transitory readable storage medium storing a computer program, wherein the computer program is used for causing a computer to perform the method of any of claims 1 to 15.

68. A non-transitory readable storage medium storing a computer program, wherein the computer program is used for causing a computer to perform the method of any of claims 16 to 22.

Receiving configuration information transmitted by a network device, where the configuration information includes a first measurement resource group set — 101

Determining, based on the configuration information, a second measurement resource group set from the first measurement resource group set — 102

Reporting, based on the second measurement resource group set, a measurement value and indication information to the network device — 103

FIG. 1

Transmitting configuration information to a terminal, where the configuration information includes a first measurement resource group set — 201

Receiving a measurement value and indication information reported by the terminal — 202

Determining, based on the indication information, a correspondence between a measurement resource group in a second measurement resource group set and the measurement value, and/or determining, based on the indication information, a measurement resource group corresponding to the measurement value — 203

FIG. 2

303

Processor

301

Memory

Bus Interface

302

Transceiver

304

User Interface

FIG. 3

403

Processor

401

Memory

Bus Interface

402

Transceiver

FIG. 4

Receiving Unit 501

Determining Unit 502

Reporting Unit 503

FIG. 5

Transmitting Unit — 601

Receiving Unit — 602

Determining Unit — 603

FIG. 6

## INTERNATIONAL SEARCH REPORT

| | International application No. |
|---|---|
| | **PCT/CN2024/095133** |

| A. | CLASSIFICATION OF SUBJECT MATTER |
|---|---|

H04W24/10(2009.01)i

According to International Patent Classification (IPC) or to both national classification and IPC

| B. | FIELDS SEARCHED |
|---|---|

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNABS, CNTXT, CNKI, 3GPP, VEN, WOTXT, USTXT, EPTXT, JPTXT: 测量资源, 集, 组, 子集, 传输点, 协作点, 数量, 个数 measurement resource, set, group, subset, TRP, transmission reception point, number

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115550954 A (HUAWEI TECHNOLOGIES CO., LTD.) 30 December 2022 (2022-12-30) description, paragraphs [0261]-[0300], [0454], and [0473], and figures 1 and 2 | 1-4, 6, 7, 9, 13-19, 21, 23-26, 28, 29, 31, 35-41, 43, 45-48, 50, 51, 53, 57-63, 65, 67, 68 |
| A | CN 111970726 A (CHINA MOBILE COMMUNICATION CO., LTD. RESEARCH INSTITUTE; CHINA MOBILE COMMUNICATIONS GROUP CO., LTD.) 20 November 2020 (2020-11-20) entire document | 1-68 |
| A | CN 112672378 A (CHENGDU HUAWEI TECHNOLOGIES CO., LTD.) 16 April 2021 (2021-04-16) entire document | 1-68 |
| A | WO 2023010405 A1 (QUALCOMM INC; KHOSHNEVISAN MOSTAFA; HAO CHENXI; ZHANG XIAOXIA) 09 February 2023 (2023-02-09) entire document | 1-68 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 July 2024** | **16 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/095133** |

| Patent document cited in search report | | | Publication date (day/month/year) | Patent family member(s) | | | Publication date (day/month/year) |
| --- | --- | --- | --- | --- | --- | --- | --- |
| CN | 115550954 | A | 30 December 2022 | None | | | |
| CN | 111970726 | A | 20 November 2020 | None | | | |
| CN | 112672378 | A | 16 April 2021 | None | | | |
| WO | 2023010405 | A1 | 09 February 2023 | EP | 4381608 | A1 | 12 June 2024 |
| | | | | KR | 20240034198 | A | 13 March 2024 |

Form PCT/ISA/210 (patent family annex) (July 2022)

**EP 4 742 739 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310834506